# EUROPEAN PATENT APPLICATION

(11) **EP 0 667 722 A1**
(43) Date of publication of application: **16.08.1995**
(21) Application number: 94200299.9
(22) Date of filing: 09.02.1994
(51) Int. Cl.: H04Q 3/00

(54) **Method of detecting service interactions in intelligent networks**

(71) Applicant: Koninklijke PTT Nederland N.V., NL-2509 CH The Hague (NL)
(72) Inventor: Kuisch, Eric Bryan, NL-2264 XZ Leidschendam (NL); Sips, Johan Willem, NL-2264 XZ Leidschendam (NL); Melisse, Alfonsius Antonius Johannes, NL-2264 XZ Leidschendam (NL); Janmaat, Ronaldus Gerardus Johannes, NL-2264 XZ Leidschendam (NL)

(57) **Abstract**

The invention provides a method of detecting service interactions in intelligent networks. According to the invention, the detection method comprises a first stage in which services are formally specified and an second stage in which the thus specified services are checked for possible interactions. The second stage may be executed automatically by computer.

## Description

### BACKGROUND OF THE INVENTION

Present day telecommunications operators increasingly offer additional services, such as abbreviated dialling or the so-called "originating call screening service". Interaction among services in (intelligent) networks occurs when the behaviour of a service influences the behaviour of another service. Interactions can be a problem, because they may occur unexpectedly and often produce undesirable effects. Interactions are a threat to networks, as the interactions cause undesired use of network resources, to service development, which is slowed down as testing of services on interaction is time-consuming, and to the marketing of services, as service users don't appreciate the unexpected effects of service interaction; it ruins their impression of the Quality of Service.

A key problem in existing service detection methods is that service specifications are often insufficient to detect interactions. They simply lack the relevant information in a suitable form.

Sufficient awareness and knowledge of the service interaction problem is required for network operators to assess the services developed by and acquired from other parties (vendors, software houses). The impact of third party-services on areas like service testing, reliability, and service management has to be determined.

Service interaction research can be considered as having four main components: service life cycle context, service description method, interaction detection method and testcase validation.

The service life cycle context is important as service interaction is a problem which is closely and directly related to the introduction and operation of services in the (intelligent) network. The service life cycle shows explicitly which activities could be affected by the service interaction problem and the setting in which methods for handling the problem should be developed. Ambiguity in service specifications is one of the main obstacles related to service interaction detection, as was demonstrated in the article "A Practical Approach to Service Interactions", IEEE Communications Magazine, August 1993, which article is herewith incorporated by reference in this document.

The resolution of service interactions is a complex issue as there are most often several options which can be motivated from different viewpoints e.g. a marketing viewpoint, a service user viewpoint or a technical viewpoint. E.g. from a marketing view point maximum flexibility in combining services is required as flexibility provides a competitive advantage. As a consequence this could motivate service interaction resolution mechanisms which fully support this flexibility while from a technical viewpoint these mechanisms might be too complex.

On the other hand a service interaction resolution which fits service user requirements tends to minimise the user confusion caused by service interactions. This might lead to mechanisms which could delay the introduction of services, whence difficult to accept from a marketing point of view, or put high requirements on technical capabilities of the network which are hard to realise from a technical point of view.

In the above-mentioned publication service operation is described as a process, consisting of several ASPs (ASP = Additional Service Processing, i.e. a "sub-process" dealing with a particular service), which influences the normal basic call processing modelled by the BCSM (Basic Call State Model). The ASPs impose conditions on the service operation, the so-called pre- and post conditions. Preconditions indicate which requirements have to be met before an instance of additional service processing is performed while post conditions indicate the status of the basic call, as well as requirements put on call processing, after additional service processing is performed. In this way a uniform description of IN (Intelligent Network) services can be obtained. However, this description has proved not to be sufficient to allow automated detection of service interactions.

### SUMMARY OF THE INVENTION

An object of the present invention is to provide a method of detecting service interactions which is highly reliable.

Another object of the present invention is to provide a method of detecting service interactions which can be automated to a large extent.

A further object of the present invention is to provide a method of specifying services which is unambiguous and which allows automated detection of possible interactions of the services thus specified.

A still further object of the present invention is to provide an improved basic call state model (BCSM) which facilitates the specification of services and the subsequent detection of possible interactions.

These and other objects are attained by the method as defined in the appending claims and described in the specification below.

The present invention provides a formalized description method for services which formulates requirements to deal with interactions. Also an process is presented which can be used to find interactions among services in a structured way.

Further features and advantages of the invention will become apparent from the description below.

### REFERENCES

E. Kuisch et al.: "A Practical Approach to Service Interactions", IEEE Communications Magazine, August 1993, pp. 24-31.

An axiomatic basis for computer programming, Comm ACM 12 (October 1969), 576-580, 583.

CCITT Recommendation Q.1211, Introduction to Intelligent Network for Capability Set 1.

CCITT Recommendation Q.1214, Distributed Functional Plane for Capability Set 1.

ETSI draft ETR NA601-09, Service Life Cycle Reference Model, (July 1993).

### BRIEF DESCRIPTION OF THE DRAWINGS

Figure 1 shows schematically possible servie execution profile cases.
Figure 2 shows schematically a service model.
Figure 3 shows schematically the Basic Call State Model preferably used the method of the present invention.
Figure 4 shows schematically execution profiles.

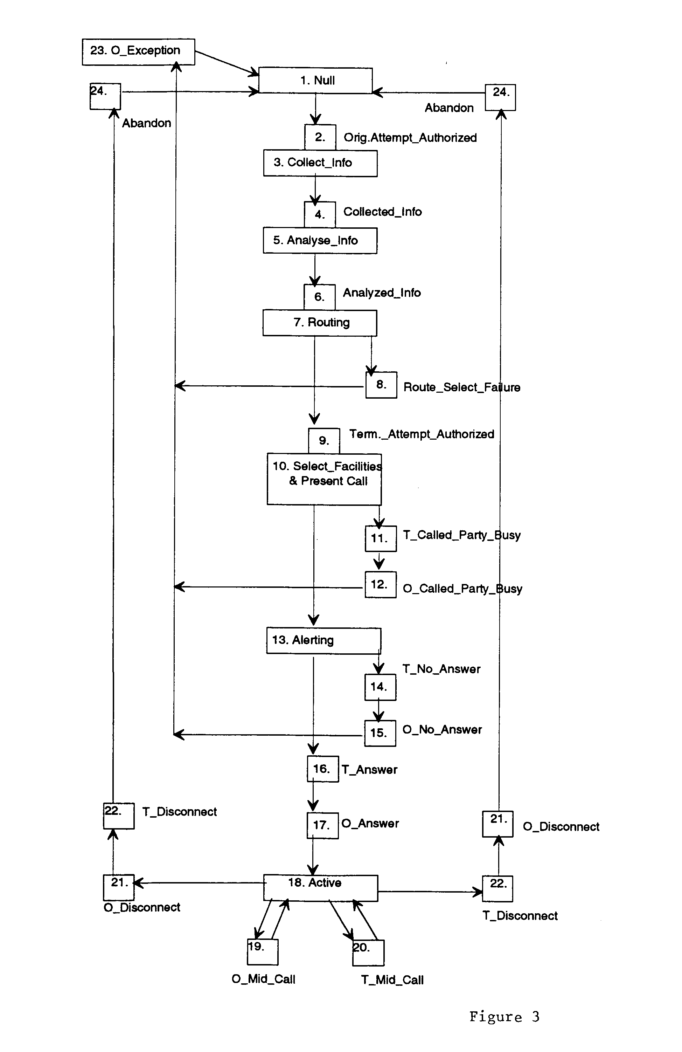

Figure 3 shows schematically conditions which may be maintained for the processing of a service.

### DETAILED DESCRIPTION OF THE INVENTION

### I. Call Modelling

The modelling of call and service processing plays an important role in the present invention. In section II the application of call and service modelling will be explained in detail. This section serves to elaborate on the basics of call and service modelling. It also describes the benefits of using this form of modelling as a basis.

The Intelligent Network (IN) functional model allows to describe an IN service as a process that influences the basic call. In fact IN service processing has two main characteristics: processing for controlling the basic call and handling of data associated to the service.

Analysis of the way in which IN services want to control the basic call and change basic call data, enables to decide if this leads to a conflict among the services; in this way service interactions can be found. The processing done by a service to control the basic call is modelled in a standard way. The main ingredients are: configurations and the basic call state model.

The Basic Call State Model (BCSM) preferably used in accordance with the present invention is based on the model described in CCITT Recommendation Q.1214 and ITU Recommendation Q.1204, both of which are herewith incorporated by reference. The BCSM described in these recommendations is considered to be a quite general and stable model for describing the view of the IN on basic call state processing.

The BCSM can be described by finite state machines. The BCSM has two parts: the originating BCSM (O-BCSM) describing all basic call processing in the call setup phase and the terminating BCSM (T-BCSM) describing the basic call processing after the call setup phase. The influence of IN services on the basic call process can be described by graphically extending the BCSM with external states called the additional service processing states (ASP). In these states actions are performed in the SCF, SRF and SDF which support the execution of an IN-service. The events which lead to ASP are the Detection Point (DP) requests of the BCSM armed to process an IN-service. Also DP notifications can be armed but they will not lead to ASP as the basic call process is not interrupted. The transfer of control from BCSM to ASP and vice versa is described by one or more SCF-SSF information flows.

The extended BCSM is an abstraction of the information flow diagrams which are commonly used to describe an IN service scenario. Comparing these descriptions can be done to assess whether services want to influence the basic call. Note that the ASPs are constructed in such a way that they can be considered as atomic processes relative to the basic call (i.e. the ASP can be viewed as one process which need not be dissected in smaller parts). This allows to identify conditions for the way in which an ASP (as a whole) is processed. In section II these conditions are explained in further detail.

Using the BCSM for call modelling has certain obvious benefits: the BCSM is a finite state machine hence allows unambiguous description of basic call processing, the BCSM hides unnecessary implementation details of basic call processing, and the BCSM shows explicitly how the basic call processing can be influenced by detection point processing. Nevertheless the usage of the BCSM by standardization bodies has some flaws which lead to an inefficient usage of the BCSM. Some of them are explained below.

The rules for detection point processing as defined in IN Capability Set 1 (CS-1) are very restrictive and don't allow simultaneous execution of IN services (if a CS-1 service is invoked there will be no possibility to process a Trigger Detection Point for an other CS-1 service). Obviously these rules are not future-proof as a multitude of desired service combinations are eliminated in this way. This is a major setback if the number of IN services grows. There is no common understanding in standardization bodies on general detection point processing rules related to the general BCSM in ITU Rec. Q.1204. This is a flaw which needs attention in future standardisation activities for CS-2 and beyond. The inventors have interpreted the detection point processing in a broader sense not adopting all the restrictions in CS-1.

Not all possible transitions between BCSM states are described in Q.1204 due to the fact that it is operator specific whether extra transitions between BCSM states are enabled. The BCSM only shows the minimal set of transitions required. The inventors have adopted extra transitions when necessary for describing the services that were used as testcases for the description/detection method.

The split of the BCSM in two parts, originating and terminating, has as setback that it doesn't provide an overall view of the call in one single model. In order to obtain this view the O-BCSM has to be related to the T-BCSM in an implicit way. For research on interactions an overal view is preferable as services are to be analysed within the scope of the entire call duration. The present detection method has solved this issue by introducing a centralized BCSM as a means to describe the entire call processing in a single model (see section III for a detailed description).

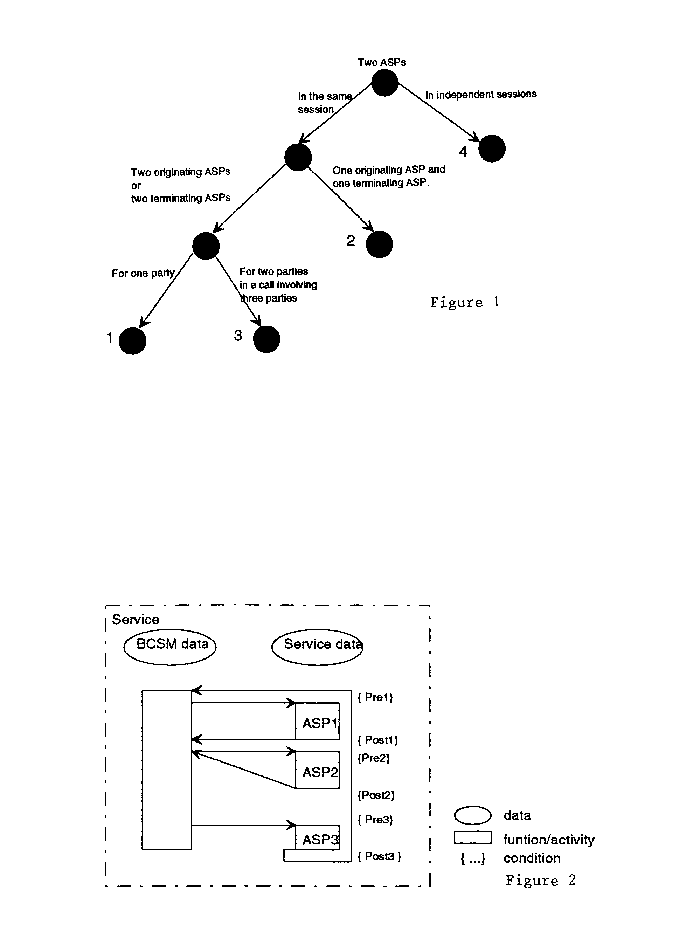

As a result of specifying additional service processing (ASP) parts it is important to know how the ASPs of two services behave relative to one another. Since the behaviour of the ASPs related to the basic call is known we can identify the execution order of both ASPs. The leaves of the tree in figure 1 describe the possible cases that have to be considered. With a multi party call not only conference calls are covered, but also forwarded calls are assumed to use an additional party: the forwarding subscriber. The leaves in the tree describe the following configurations:
1. Both ASP1 and ASP2 operate for one party of the call (either terminating or originating). E.g. call forwarding on busy and call waiting.
2. One of the ASPs operates for the originating party and one operates for the terminating party. E.g. outgoing call screening and calling line identification presentation.
3. Both ASPs operate on different terminating or on different originating parties of the call. E.g. call forwarding and incoming call screening.
4. Both ASPs operate in independent sessions (e.g. Automatic Call Back and Terminating Call Screening)

The basic call processing performed in each configuration is related to the Basic Call State Model in order to compare ASPs.

The BCSM plays a role in the analysis of conflict of control in the aforementioned configurations. This role is not equally important for all configurations. For instance analysis of configuration 1 relies heavily on the BCSM as all ASPs which are considered are related to either the O-BCSM or the T-BCSM and there are potentially a lot of conflicts of control possible. For configuration 2 the situation is different as in that case one ASP is related to the O-BCSM and the other to the T-BCSM. Nevertheless, as the O-BCSM and T-BCSM are implicitly linked there are potential conflicts of control. In this case the centralized BCSM helps to relate both ASPs to each other (see section III for more details). Configuration 3 is a special case where the benefit of the BCSM is limited. The reason is that in configuration 3 we already know the processing which has been performed for the originating party and intermediate party so conflict of control is not the issue to be studied but conflict in data processing. For analysing conflicts in data processing the present invention uses other means: the pre and postconditions (see section II below). The same reasoning applies to configuration 4: we only need to consider conflicts in data processing, using pre and post conditions.

### II. Specification of Services

In this section an overview is provided of the use of pre, post and global conditions to specify services and for using them in the detection of interactions. The nature and contents of pre, post and global conditions will be described, followed by some examples.

In the above-mentioned article "A Practical Approach to Service Interactions" an outline is presented for the usage of pre and post conditions of services (or more precise: ASPs) for interaction detection. There, pre and post conditions were expressed rather informally and incompletely, which might undermine their applicability. The present invention provides an improved way of stating pre and postconditions.

Pre and post conditions in general express some activity or function of a system (or a part of it) in terms of states of the system: one before the activity is to take place (i.e. pre condition) and one after the activity has been performed (i.e. post condition). Pre and post conditions express what the activity is, not how it is performed. The present invention concerns detection of interaction based on service specifications; this yields an interest in what a service (or ASP) is supposed to do (and not how it is realised). The Prior Art description of services provides no possibilities to compare services to examine their mutual influence: the description shows a construction of the service, but lacks the desired view on the result of a service and its intention (seen from the user's viewpoint). Pre and post conditions are able to express both, results and intention, and seem therefore more suitable.

In accordance with the present invention general statements concerning service are expressed in global conditions. I.e., in addition to pre and post conditions, global conditions are used for service specification. Three types of global conditions can be distinguished: global conditions, holding during the entire call, global pre conditions, holding until the moment of execution of an ASP, and global post conditions, holding after the executions of an ASP until the end of a call. When regarding an ASP in the light of the intention of a service, not only its 'local' behaviour (that what it exactly does) should be taken into account, but also its addition to the intention of the entire service. This might be expressed by the global conditions.

Applying pre, post and global conditions, the following entities should be described: the boundary of the system, the activities taking place and a means to express the states of the system. Since all services in IN are designed to have impact on calls, it seems suitable to choose a call as the system in which service activities are performed. If one service is to be examined figure 2 shows the call (i.e. service model) in which service activities take place. In this context, two different entities can be found: the BCSM, which is the base for all services, and a set of ASPs, together describing the different activities next to the BCSM to take place. The BCSM has a known and invariable behaviour. Each of the ASPs, however, performs some activity, which is not common to all services; therefore, it is a possible cause of interaction, when applied together with other services. The ASP behaviour can now be expressed by means of: (In this text, comments in specifications will be between rand ^{*}/). ASPs can only be described in this way if they can be regarded as 'atomic actions', i.e. if during the performance of an ASP it can't be influenced by other ASPs. However, ASPs can be regarded as 'atomic actions' since the mechanism of DP-processing establishes that an ASP is bounded by the hand-over of control to an ASP by the BCSM and the return of control to the BCSM by the ASP. This yields that communication with an SRF or an SDF is integrated in an ASP. In order to express pre and post conditions properly, some set of 'basic' attributes is necessary. These attributes form the 'ingredients' of the conditions, making a comparison between conditions possible.

Since ASPs and the BCSM influence each other, there should be some common 'data space', i.e. a common set of data, for them within the context of a call. For an arbitrary service several types of data can be distinguished:
• BCSM Data: referring to the data used by the BCSM; e.g. CallingPartyNumber and CalledPartyNumber. BCSM Data is transferred between BCSM and ASPs.
• BCSM State Information: referring to the Detection Points and states of the BCSM. BCSM State Information is transferred between BCSM and ASPs at the beginning and end of an ASP.
• Service Data: referring to specific data types for a particular service; e.g. a Personal Number in case of PTS. Often, those data types are ordered in one or more tables with service related constraints. The Service Data is not transferred between BCSM and ASPs, since it is not part of the communication between them.
. User Interaction Data: referring to the communication of the service with end users; it comprises Announcements to the users and Collected Info from the users. User Interaction Data is transferred between the basic call process and ASPs.

Together, those data types form the data environment of a service. When referring to the way BCSM and ASPs influence each other, it is clear that all communication between BCSM and ASPs has to be taken into account. The term attribute is introduced for this purpose: an attribute is data, known by both BCSM and an ASP, used to influence each other's behaviour. The type of attributes can either be BCSM Data, BCSM State Information or User Interaction Data. By giving attributes a unique name, to be used for all service descriptions, the set of attributes is the basis for interaction detection in service specifications: the history of BCSM Data can be tracked, the coverage of BCSM states by ASPs can be determined and the sequence of User Interaction Data can be observed. However, attributes alone are not enough to express pre and post conditions, as is shown below.

Services have a certain goal: OCS (Originating Call Screening) is used to prevent calling certain numbers, often because of high costs (among other reasons); VPN (Virtual Private Network) suits the desire to have a private and common communication structure within a company. Often, special data types and datatables are introduced to support this goal: a screening list for OCS (either containing excluded numbers or permitted numbers); a number plan for VPN and a similar service list for each user of a specific VPN.

The division of a service in one or more ASPs is a way to identify some steps to reach the goal of the service; this implies that pre, post and conditions of ASPs should somehow reflect this goal. e.g. CalledPartyNumber is not part of the OCS excluded number list. This reflection of the goal in pre and post conditions is however not always straightforward (how to express that there is a common communication structure in VPN?). A general (global), invariable condition concerning Service Data is desirable; it is to be used in combination with both pre and post conditions to stress the purpose of the service.

In addition to the global conditions, there are local conditions to be met: each ASP is started in a Detection Point, often after the DP criteria (conditions concerning BCSM Data) have been checked. Therefore, every pre condition of an ASP should include a condition concerning BCSM State Information (i.e. Detection Point for starting the ASP) and the DP criteria (true, if there are no criteria). Like the start of an ASP, the end is related to some BCSM state or Detection Point; the post condition always contains a condition concerning BCSM State Information.

Finally, pre, post and global conditions should reflect what activity takes place: it describes changes in BCSM Data and User Interaction Data. Those changes can often be expressed in terms of Service Data; e.g. the CalledPartyNumber, originally containing a VPN number, is changed into the public directory number according to the VPN number plan table.

In order to make expressions concerning attributes possible, a (standardised) set of operations on those attributes should be available; those operations allow to indicate which changes can be given to attributes.

Summarising, it can be stated that specifications of ASPs generally contain three types of conditions:
• global conditions, related to the goal of a service
• local conditions, related to BCSM State Information
• activity conditions, related to BCSM Data and User Interaction

Most often, pre and post conditions will contain some cases to express different possibilities for call handling: a CalledPartyNumber may or may not be present on an OCS screening list (in the latter case the call is connected, in the first case not); according to a specific (maybe wrong) choice made by the end user different scenario's of call handling might be performed. Next to normal cases in call handling, some internal faults may occur (e.g. database not available), resulting in a special treatment (i.e. extra case).

An example will be given to show the strength of pre and post conditions. The Originating Call Screening service (OCS) will be used: it is a service that blocks calls to certain numbers (stored in an OCS-table); in a commercial OCS service there may be a possibility to bypass this blocking (by means of a PIN- check), but for reasons of simplicity this extension will not be taken into account.

The OCS service is triggered at the Analysed Info detection point and will return in the same detection point if the call is allowed; otherwise the BCSM will be resumed in its initial state (Null).

For the OCS service the following table is introduced:
OCS-table: CallingParty & CalledParty
Key: (CallingParty, CalledParty)

The type of CallingParty and CalledParty is resp. CallingPartyNumber and CalledPartyNumber. The interpretation of this table is: the occurrence of (CallingParty, CalledParty) in OCS-table means that a call from CallingParty (originating side) to CalledParty (terminating side) is not allowed. Because of this interpretation both columns should be marked: the column CallingParty is related to the attribute CallingPartyNumber and CalledParty to CalledPartyNumber.

The symbols used in the example below have the following meanings respectively: A - and, V - or , - not, - concatenation.

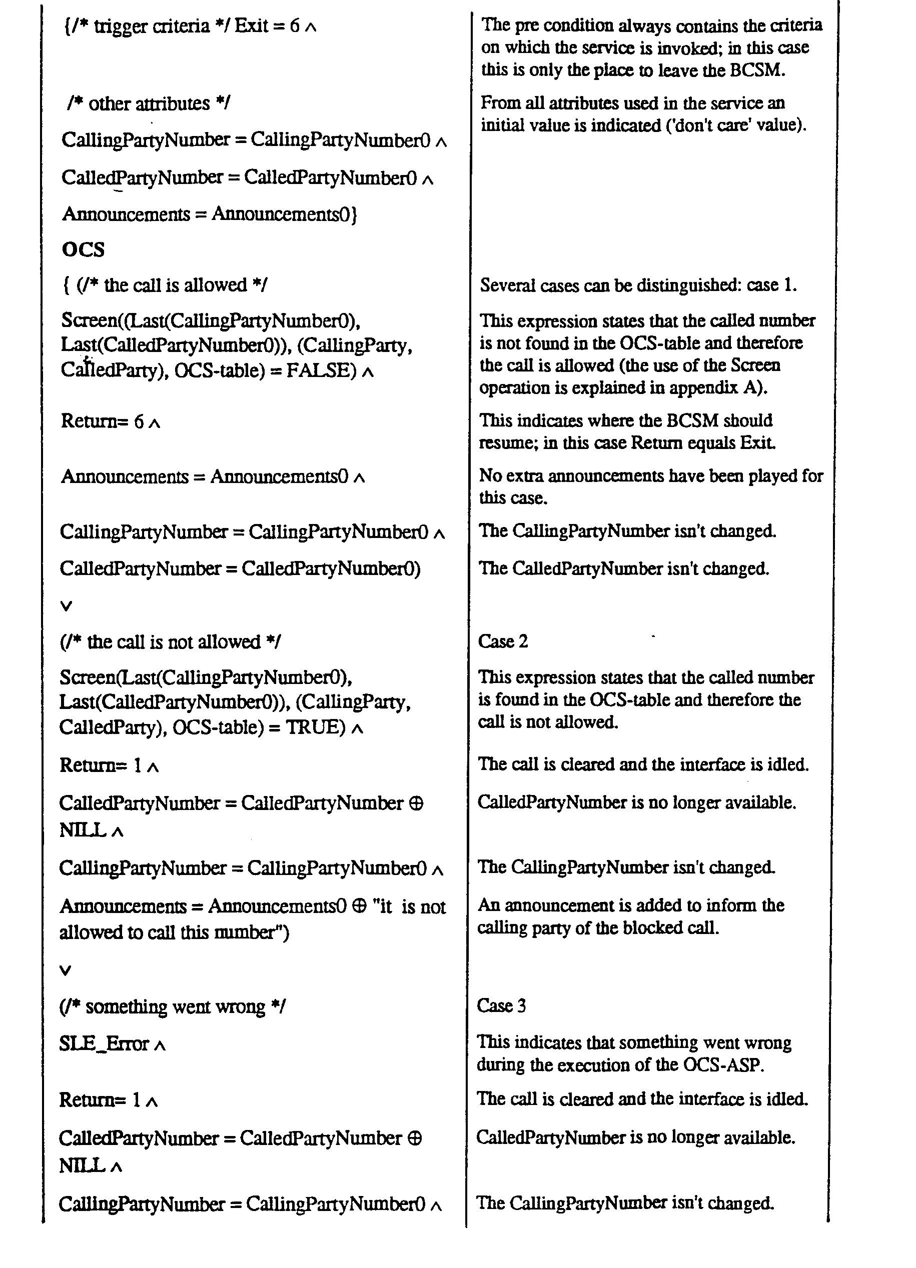

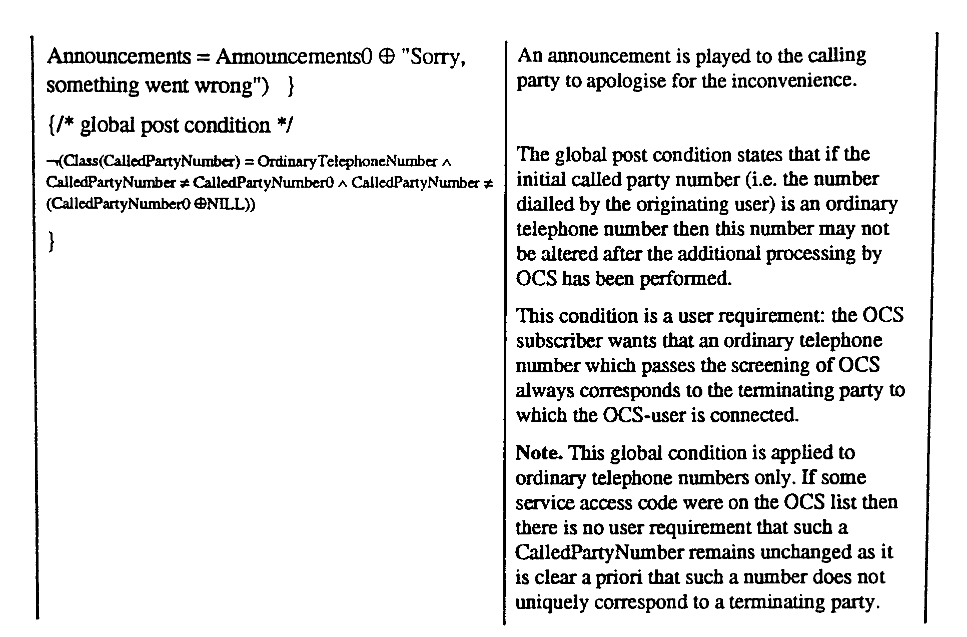

Below it is shown how pre, post and global conditions of ASPs can be derived. The following conventions will be used for specifying ASPs in terms of pre and post conditions:
• pre and post conditions are denoted between brackets: {pre condition} ASP {post condition}
• pre and post conditions might be provided with comments as follows: /* (comment) ^{*}/
• pre and post conditions contain a mathematical logic notation:
   A denotes the 'and' operator
   V denotes the 'or' operator
   denotes the 'not' operator

Further, the mathematical 'equals' sign (=) will be used, as well as a set of operations on data.

• to facilitate the overview of the conditions and to suit the interaction detection algorithm all cases in the conditions are elaborated fully; in practice this might lead to duplication of information; besides, all information occurring in the pre condition is also available in each case of the post condition (and vice versa).
   {(expr1 V expr2) ∧ expr3} will be written as
   {(/* case 1 */ expr1 ∧ expr3) V (/* case 2 */ expr2 ∧ expr3))

This form will be called 'disjunctive'. A disjunctive condition consists of the disjunction of expressions only using the ∧ symbol. These expressions will be called the conjunctive parts of the condition.
• only expressions concerning data that is changed by an ASP will be used in pre and post conditions; this yields that data not mentioned in a pre and post conditions will be regarded as 'unchanged'. An exception to this is the case in which data must have some value, since is it used as an input parameter for some operation (but not changed).
• to express that some data exists but is not bound to any specific value ('don't care'), the following notation is used:
   (name of data) = (name of data>0
   e.g. CallingPartyNumber = CallingPartyNumber0
   meaning: CallingPartyNumber has some value.
   This expression is referred to as specification variable.
• to express that some data is not available (and has no value), the 'value' NILL is used.

The following data types can be used in pre and post conditions; each of the data types is accompanied with some operations to be used in expressions of the pre and post conditions.

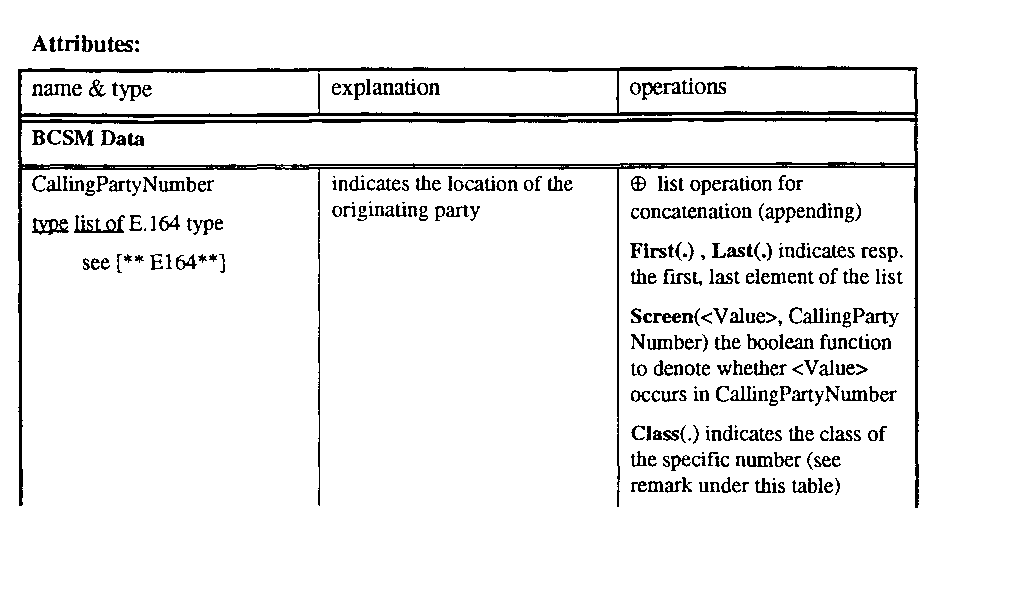

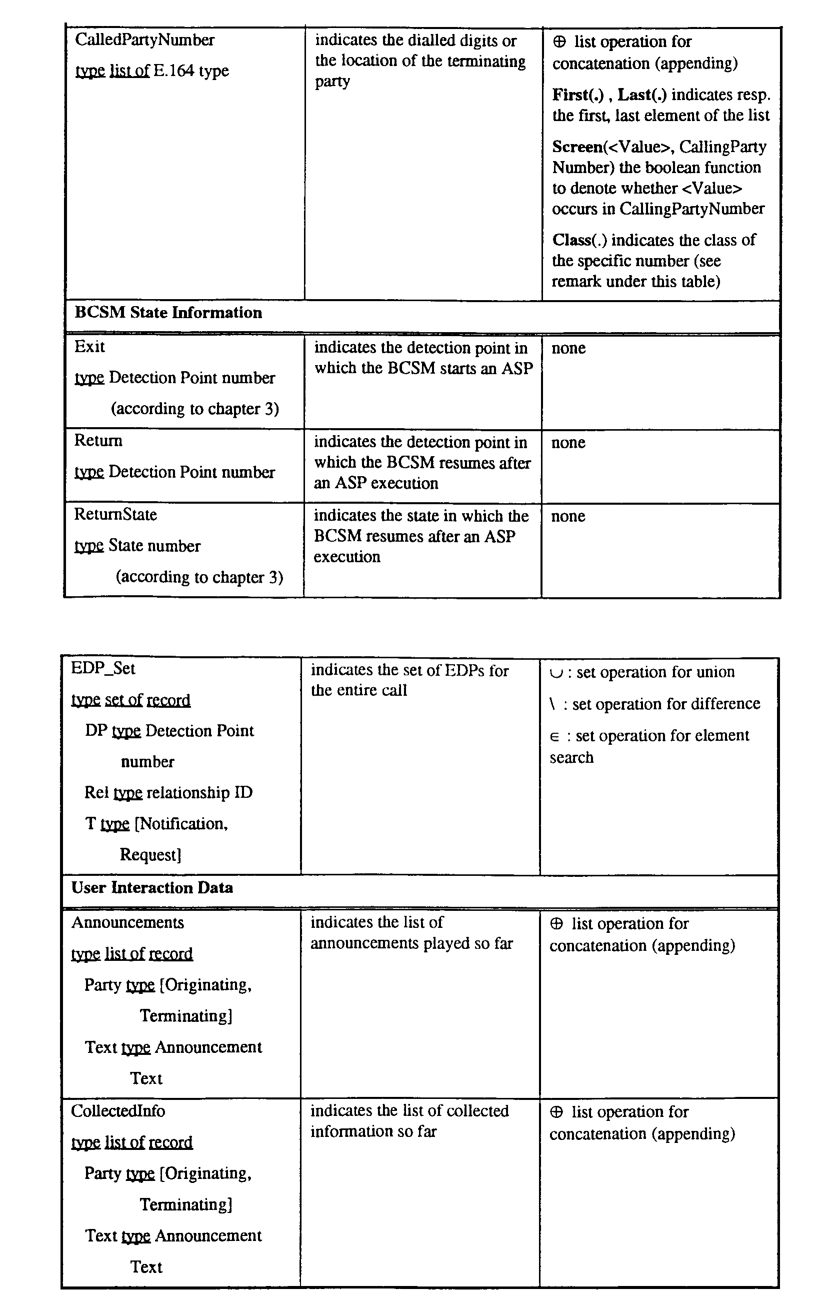

The typing (function Class), mentioned for CalledPartyNumber and CallingPartyNumber in the table above, is desirable for expressing the service characteristics:
- ordinary telephone number (national and international),
- personal number (in case of UPT/PTS),
- terminal number (in case of mobile telephones),
- special tariffing number,
- service number (e.g. call forwarding activation).

Those types can be determined, based on the present number plan. In this text the Class typing is used without an explicit mapping on numbers. It recommended to look if it possible to use the Nature of Address Indicator for this purpose.

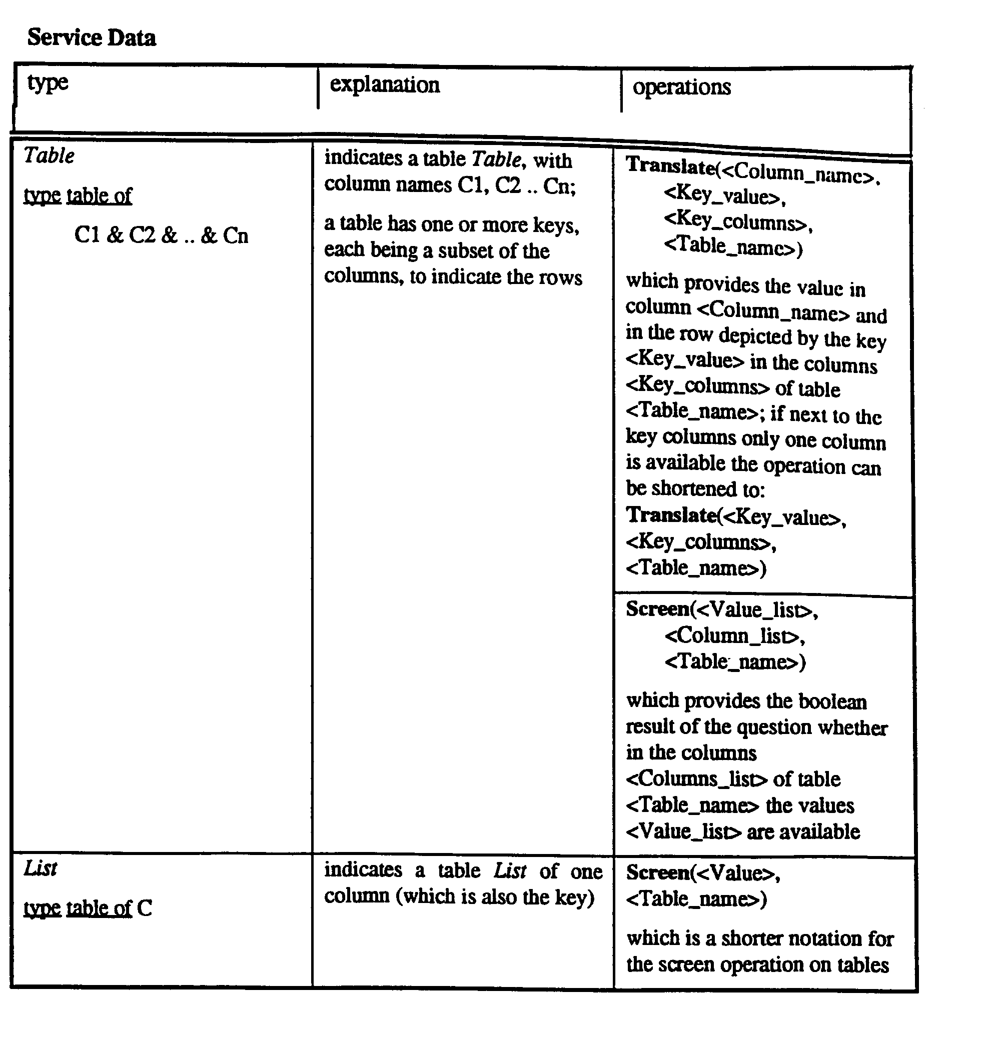

### General data types

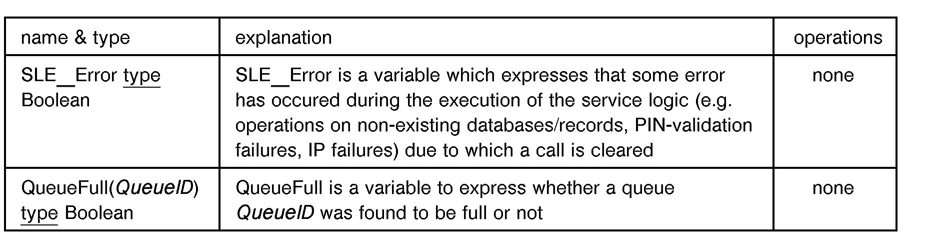

The following steps are to taken when starting with a SIB specification of a service:
1. Define a database structure for the Service Data like given above. Mark all columns that are directly related to attributes.
2. Define a global condition expressed in terms of the goal of the service (within the user's viewpoint), the Service Data and attributes. It is possible that no global condition is found. For each ASP do:
3. Write the DP criteria, including BCSM State Information, as the first part of the pre condition. Add for every attribute not mentioned an expression to indicate the attribute has a 'don't care' value.
4. Identify all attributes used by the ASP. This can be done by checking if attributes are used as input or generated as output of the ASP: by looking for all marked columns in step 1, by looking for the SIB Userlnformation, and by determining the BCSM State Information: exit DP and return DP/state(s).
5. Identify all Service Data used by the ASP by looking for the following SIBs in the specification of the ASP: Screen, Translate and Service Data Management.
6. Identify the possible cases an ASP may lead to (conjunctive parts):
   - a 'succesfull' ending of the ASP, according to the goal
   - some 'fault' was detected during the execution of an ASP: e.g. wrong PIN, screening not passed, wrong number etc.
   - a failure of the execution of the ASP (SLE Error)
      and write down the specific expression that indicates the case. These expressions can be expressed in terms of the BCSM Data found in step 4, the Service Data found in step 5 and the intial values of the attributes (step 3). These criteria form the base for the post condition, 'separated' by e. Example: 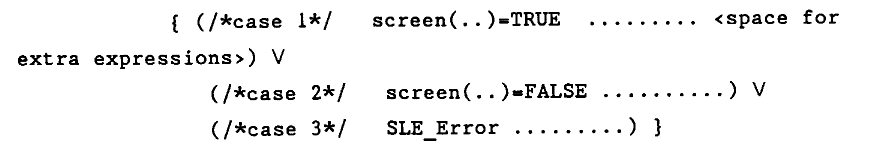
7. For each case, add expressions ('separated' by A) concerning the values of attributes (using the appropriate operations). This can be done by:
   - looking for BCSM Data in the input and output of the SIBs: Distribution, Queue, Screen and Translate
   - looking for new EDPs and TDPs to be set (related to BCSM State Information)
   - looking for the Userlnformation SIB (related to User Interaction Data) Check if in every expression the value of an attribute should be the intial value (step 3) or a new one.
8. Check if all attributes mentioned in the pre condition occur in at least one of the cases of the post condition; if not, remove the expression concerning the attribute from the pre condition.
9. Check if each attribute mentioned in the pre condition occurs in all cases of the post condition; if not, add to the case where the attribute is missing an expression ('separated' by A) to assign the initial value or NILL to the attribute (if an attribute should have a new value after execution of an ASP (based on the goal), but didn't get one, because of faults or failures, the value should be NILL).
10. Check if there is a part of the post condition that should hold for a longer period (during several states of the BCSM). Separate this part, and write it down as a global post condition. Do the same for the pre condition.

The pre and post conditions are now ready to be used in the process for detection of interaction.

When using a textual description, the steps to be taken to derive pre and post conditions are very similar to the ones mentioned above, except for the use of SIBs and ASPs. As a general rule should be taken that unclarities in the service description should be eliminated before starting the following steps.
1. Define a database structure for the Service Data given below. Mark all columns that are directly related to attributes.
2. Define a global condition expressed in terms of the goal of the service (within the user's viewpoint), the Service Data and attributes. It is possible that no global condition is found.
3. Step through all detections point in the BCSM and identify for each detection point the activities to be performed. Mark the detection points for which interruption of the BCSM is necessary: they are to be regarded as ASPs.

For each ASP do:
4. Determine a trigger condition for the ASP and write this condition as the first part of the pre condition. Add for every attribute not mentioned an expression to indicate the attribute has a 'don't care' value.
5. Characterise the ASP in general terms, i.e. answer the question: what is the ASP expected to do and which cases can be recognised?
6. Step through all attributes and identify whether they will be used in the ASP (as input or as output).
7. For each attribute used as input, found in the previous step, determine per case (step 5) its usage in operations on the database structure found in step 1.
8. Determine per case (step 5) the value of each attribute, used as output, in terms of the database structure of step 1 and the operations of step 7. Write those expressions in the post condition, 'separated' by V (conjunctive parts). Example: 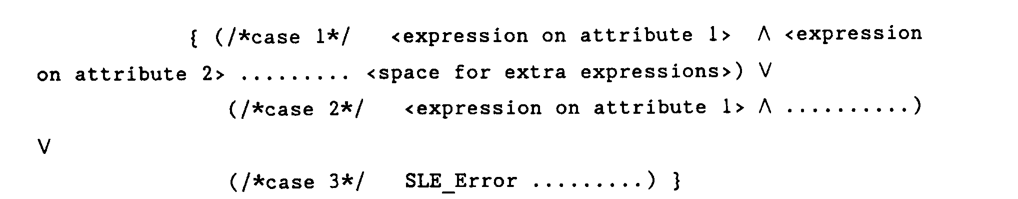
9. Check if all attributes mentioned in the pre condition occur in at least one of the cases of the post condition; if not, remove the expression concerning the attribute from the pre condition.
10. Check if each attribute mentioned in the pre condition occurs in all cases of the post condition; if not, add to the case where the attribute is missing, an expression ('separated' by A) to assign the initial value or NILL to the attribute (if an attribute should have a new value after execution of an ASP (based on the goal), but didn't get one, because of faults or failures, the value should be NILL).
11. Check if there is a part of the post condition that should hold for a longer period (during several states of the BCSM). Separate this part, and write it down as a global post condition. Do the same for the pre condition.

The pre and post conditions are now ready to be used in the process for detection of interaction.

The following example will show the application of the steps mentioned for deriving pre and post conditions from textual description. The example will use the Originating Call Screening service (OCS):
"Originating calls may be controlled by the Originating Call Screening capability. This allows the subscriber to specify that outgoing calls be either restricted or allowed, according to a screening list and, optionally, by time of day control. This can be overridden on a per-call basis by anyone with the proper identity code." [Q.1211] ]

The OCS service used here will contain a list of numbers that are not allowed; besides, for reasons of simplicity, the passing of the screening by using identity codes will not be taken into account. Following the steps given above will lead to:

Step 1 dictates to identify a database structure for OCS; since OCS is expected to be active, we abstract from the data used to indicate the OCS activation status (it is a trivial function). The following database structure will be used:

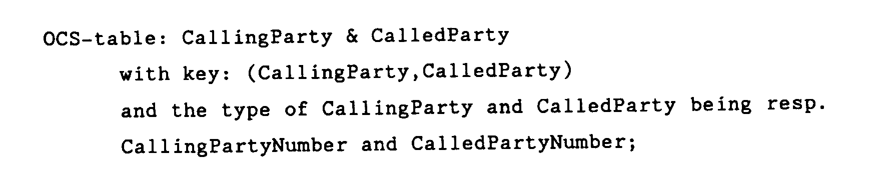

The interpretation of this table is: the occurrence of (CallingParty,CalledParty) in OCS-table means that a call from CallingParty (originating side) to CalledParty (terminating side) is not allowed. Because of this interpretation both columns should be marked: the collumn CallingParty is related to the attribute CallingPartyNumber and CalledParty to CalledPartyNumber. The following expression indicates the same: When a call is active, the CallingPartyNumber and CalledPartyNumber will not occur as a row in OCS-table. Or using attributes (using BCSM state to indicate the state of the BCSM):

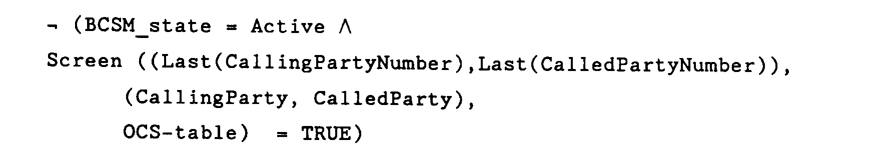

Step 3 leads to the conclusion that Info Analysed is the proper DP to start the only OCS-ASP. Stepping through the ASPs for OCS is restricted to one ASP. Step 4 leads to the following pre condition:

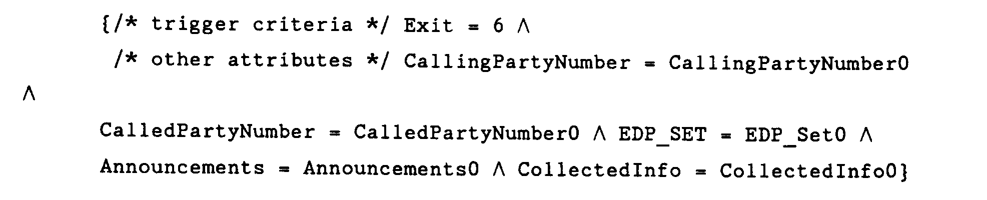

In step 5 the goal of the ASP is determined: check whether a call is allowed or not. The following cases can be identified. For OCS those cases are related to the possible paths after the screening has been performed; three cases are possible:
• the pair (Last(CallingPartyNumber0), Last(CalledPartyNumber0)) is not found in OCS-table; this means that the call is allowed,
• the pair (Last(CallingPartyNumber0), Last(CalledPartyNumber0)) is found in OCS-table; this means that the call is not allowed,
• something went wrong during the execution of the ASP.

Step 6 leads to the following attributes:
• CallingPartyNumber and CalledPartyNumber (mentioned in step 1)
• Announcements (because of the need to inform a user when something goes wrong or when the call is not passed)
• Exit and Return (used to indicate the begin resp. end of the ASP)

Step 7: It is possible to write the cases (step 5) in the following format, being the base for the post condition:

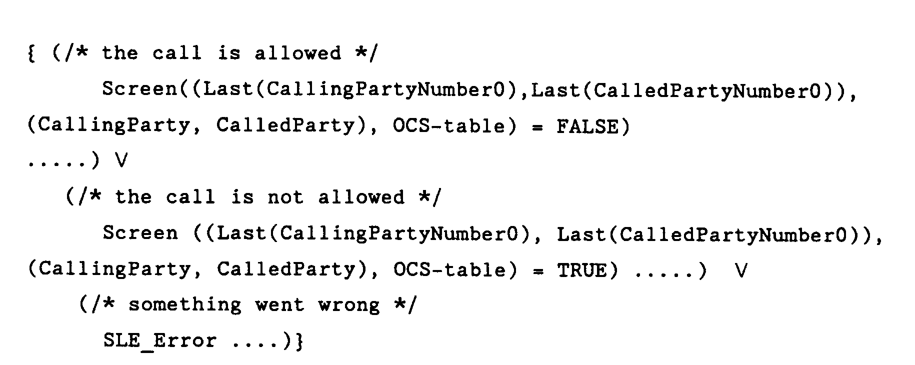

In step 8 the post condition is extended: in the case the call is allowed, nothing is changed except the Return; in the case the call is not allowed and in the case something went wrong the CallingPartyNumber is assigned to NILL and Announcement is changed. This yields:

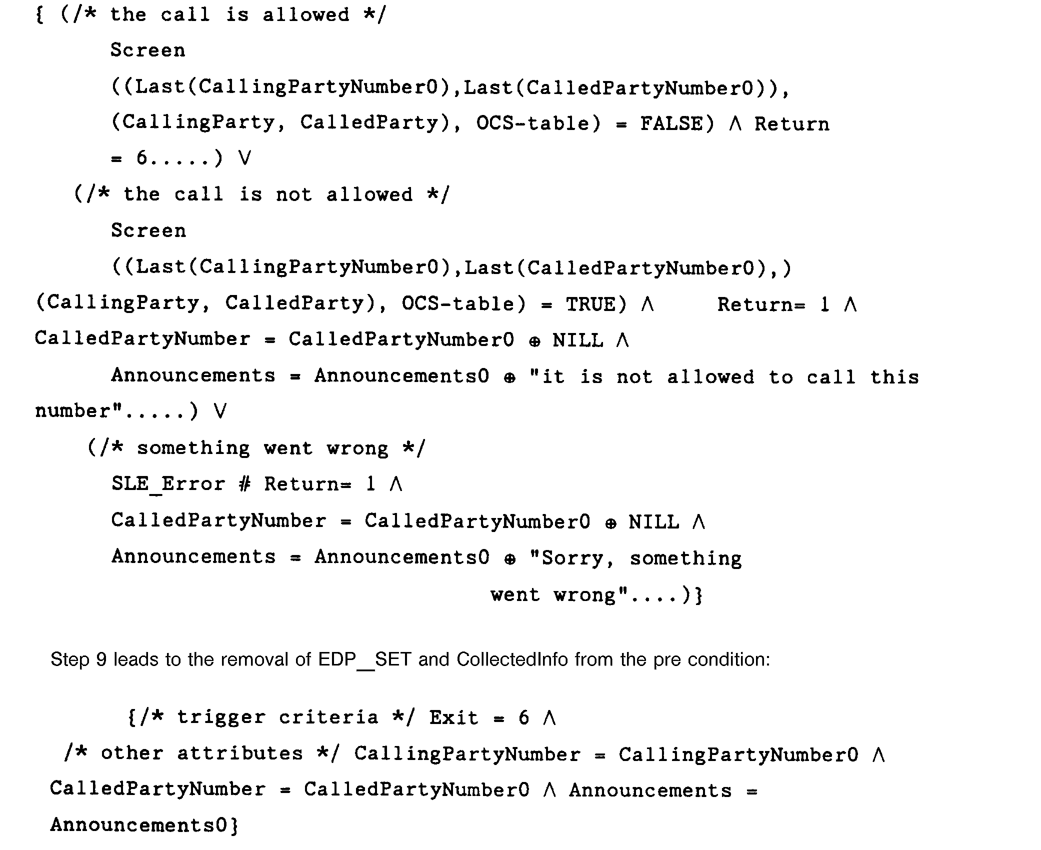

Step 10 result in the following post condition:

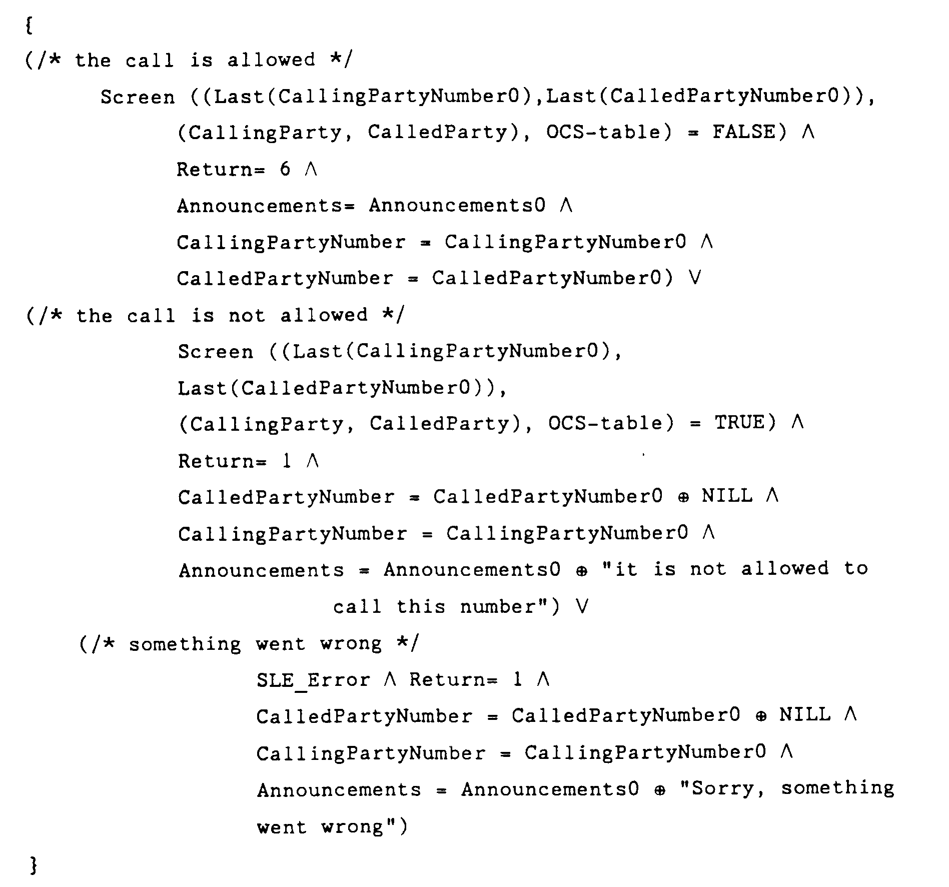

In step 11 is concluded that the CalledPartyNumber, if it is an ordinary telephone number, may not be changed after this check. So the expressions assigning a value to CalledPartyNumber should be regarded as global conditions.

This finalises the derivation of pre and post conditions for OCS:

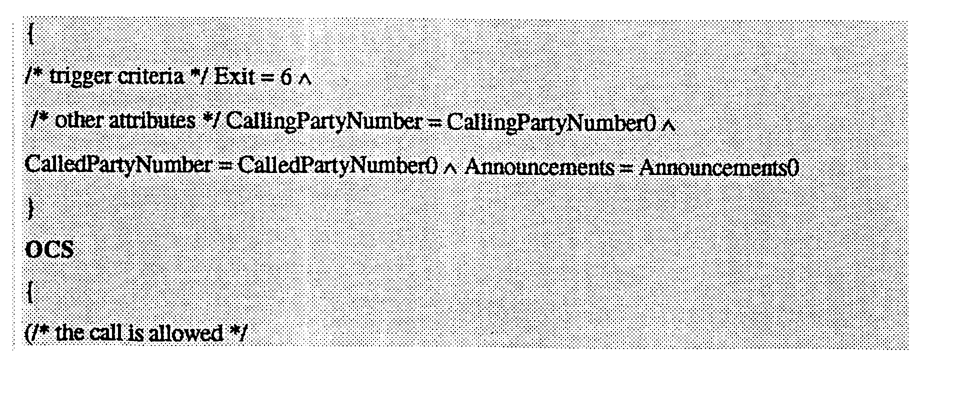

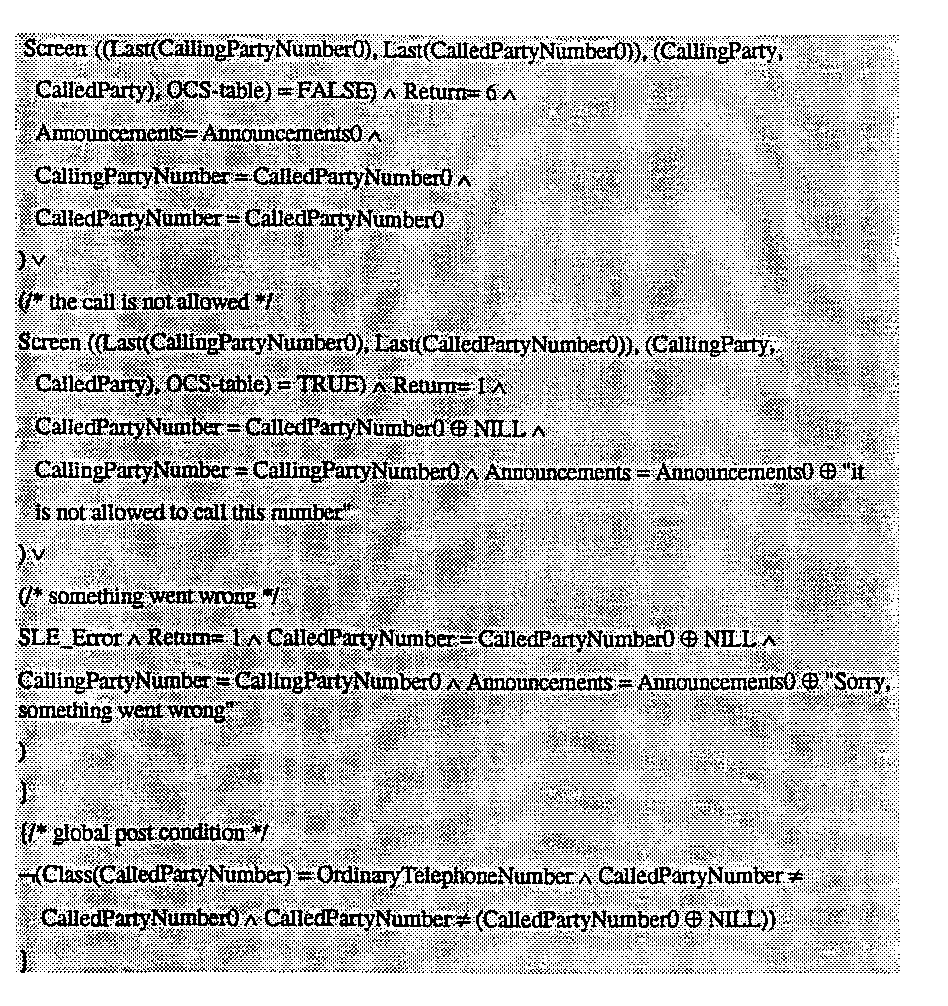

Taking into account the global condition and the result of the screening, due to the OCS ASP, one can easily see that the global condition, stated in step 2, is reflected by the global post condition above if the BCSM is in the Active state.

### III. Detection Process

The detection method will concern the pairwise comparison of features at specification time, so called 'static' detection. The specification does not cover problems caused by the plain processing of an ASP and the basic call. This implies that 'loops' in the BCSMs are not considered in the detection process. An influencing process (ASP2) might cause such a transition, which was not taken into account by ASP1. Still we regard this as interaction between ASP1 and the basic call.

The specification:
Input: two ASPs (called ASP1 and ASP2) specified as described in section II.
Output: an answer to the question 'does interaction occur between ASP1 and ASP2'

This specification has a flaw, since an important aspect to specify is: "what is interaction?" Most interaction cases that are described in the literature, are based on what the author or spotter of the interaction case thinks is a conflict. If one author would write formal specifications of two features, and then implement the features such that the implementation satisfies the specification then he should be surprised if interactions occurred, because the system will run as specified. The problems that this author identifies are due to problems that are not taken into account in the specifications. Besides, maybe the author's customer, say a marketing department, may experience other interactions than the author. The reason for these 'mistakes' is that the author was not provided with a complete informal specification, i.e. the intentions of the service (taking other services into account) were not specified. Apparently it is accepted that interaction occurs when two features are specified by different service specifiers and the system with the two features runs as specified. It would be a major drawback for attempts to detect interaction if service specification does not describe what is required to be able to detect interaction. This does not mean that service specifications should be 'interaction specifications', but it means that service specifications were not complete specifications. With partial specifications it will also happen that with detection methods no interactions can be found.

This leads to the following consideration on the definition of interaction, as used to detect interactions statically. If from the feature specifications themselves no interaction can be found and a feature will be executed this will be considered as behaviour according to the specification. Hence, this is no interaction according to our definition. If from the specifications it can be detected that conflicts in specification exist then: the consecutive execution of features will show undesired behaviour, i.e. interaction.

Paying a lot of attention to service specifications inherently will resolve a lot of potential interaction cases. This should not result, however, in specifications that take other features into account explicitly, but it should result in specifications that are complete and describe behaviour as generic as possible.

As stated above, an ASP specification has the following format:

### (Table definitions)

{Global} : between every call related (atomic) operation this condition should hold
{PreGlobal} : ditto, but only until the ASP is executed
{Pre} : this condition is the pre-requisite for the ASP to be executed

### ASP

{Post } : this condition is established by the execution of the ASP {PostG!obal}: similar to the global condition, but the ASP has been executed.

For the development of the verification rules it is very important to grasp the use of the global conditions. A global condition for an ASP specification is only relevant when it is known that the ASP will be executed. I.e. if execution of an ASP is assumed then the global conditions start playing a role. The global conditions, however, express invariance of a predicate on certain data. We assume that the initial state of the entire system (especially the data model) satisfies all existing conditions. Hence no inconsistencies exist before ASPs will be executed. This implies that for all verifications the global conditions identified as valid initially may be used as assumptions under which the verification of the rules necessary for the detection process takes place.

Before continuing, a way to describe the rules that have to be verified is required. To describe rules that include processing the same description method will be used as used for our specification: {P} S {Q} (Hoare-triples, see the above-mentioned reference "An axiomatic base for computer programming"). But now, {P} S {Q} is not a specification of S, but a verification rule: if P holds and S is successfully executed, will Q hold afterwards? Since {P} S {Q} is no specification for S, this verification rule is not trivial in many cases. Note that if we conclude that P does not hold, then S should or will not be executed. So:
When {P} S {Q} is written as a verification rule, then:
   • if P does not hold: conclude FALSE
   • if P holds and {P} S {Q} holds: conclude TRUE
   • if P holds and {P} S {Q} does not hold: conclude FALSE

In the verification rules used in this report S will often have the following format:
CallProcessing(x,y)
or the following format:
   ASPx

CallProcessing(x,y) represent the processing according to the BCSM from state x until state y has been reached. Note that if from the conditions themselves no interaction can be concluded, then the logic of the service is required to properly verify the verification rule.

For a proper verification of rules the specification variables used in the specifications of the ASPs that are being compared should be distinct. This can easily be arranged, e.g. by changing a digit at the end of the name of the specification variable. This is allowed as long as this change is done similar for all occurrences of the same specification variable. Besides, the exit- and return-state related information in Pre and Post is not needed anymore and should not be used for the verification of the rules derived below.

The following paragraphs describe an extensive verification of all possible aspects of additional service processing (ASP) and its impact on a method to detect interactions. A basic assumption of the comparison of two ASPs is that the two ASPs are not developed to cooperate. Alternatively phrased: the ASPs can be considered as being specified indepent from each other.

Start by dividing features in parts which can be considered atomic when viewed from the basic call process. This results in the split into ASPs. Of course ASPs from one feature should not be compared, since it is assumed that features are correctly specified, i.e. these pairs are no input for the detection process. To support this, the sets of ASPs which together constitute a feature should remain visible for the detection process. The detection should be performed on a pair of ASPs from different features and on identical ASPs.

As a result of specifying additional service processing (ASP) parts, specifications should be comparable by means of comparing conditions. It is important to know how the ASPs behave related to one another. Since the behaviour of the ASPs is known to be related to the basic call the execution order of both ASPs can be identified. This order or behaviour is called the execution profile of the two ASPs.

The leaves of the tree in figure 1 describe the possible execution profile cases that we have to consider. With three-party calls not only conference calls are covered, but also forwarded calls are assumed to use an additional party: the forwarding subscriber. The leaves in the tree depicted in figure 1 describe the following four configurations:
1. Both ASP1 and ASP2 operate on one party of the call (either terminating or originating). E.g. call forwarding on busy and call waiting.
2. One of the ASPs operates on the originating party and one operates on the terminating party. E.g. outgoing call screening and calling line identification presentation.
3. Both ASPs operate on different terminating or on different originating parties of the call. E.g. call forwarding and incoming call screening.
4. The ASPs operate on independent instances of a call.

For configuration 1 the execution profile of the ASPs can rather easily be determined by using the O-BCSM or T-BCSM [CCITT Rec.Q.1214]. At first sight configuration 2 provides more problems. But the close (deterministic) relationship between the O-BCSM and the T-BCSM enables to determine the execution profile of two ASPs. These considerations have led the inventors to propose a new model that integrates the O-BCSM and T-BCSM into one model, used to easily determine the execution profile of two ASPs in configuration 1 and 2. Since this model has similarities with a centralised call model it is called C-BCSM. In this model another disadvantage of the O-BCSM and T-BCSM in CCITT Rec.Q.1214 can be removed. When expressing the exit and return points of an ASP in natural numbers, return detection points and return states have to be distinguished. The numbering of detection points and states (PICs) is disjunct. Since the detection points and the states are strictly related to each other simple numbering that enables profiles to be determined easily can be introduced. Figure 3 depicts the C-BCSM.

It is obvious that configuration 4 should always be considered, since distinct execution of independent ASPs is always possible. Also it should be obvious that either configuration 1 or configuration 2 is always possible, since either both features are originating or both features are terminating or one is originating and one is terminating. Configuration 3 is not relevant for all ASP combinations, but this is related to the semantics of an ASP. E.g. if an ASP has the functionality to add a leg to a call configuration 3 will have to be considered.

The configuration considerations might result in the 'same' spotted interactions, but since completeness should be achieved this should not be a problem. E.g. ASP2 is prevented from execution by ASP1 if both features are executed in the same call (configuration 1). When executed in two independent call instances another conflict (in data processing) might occur.

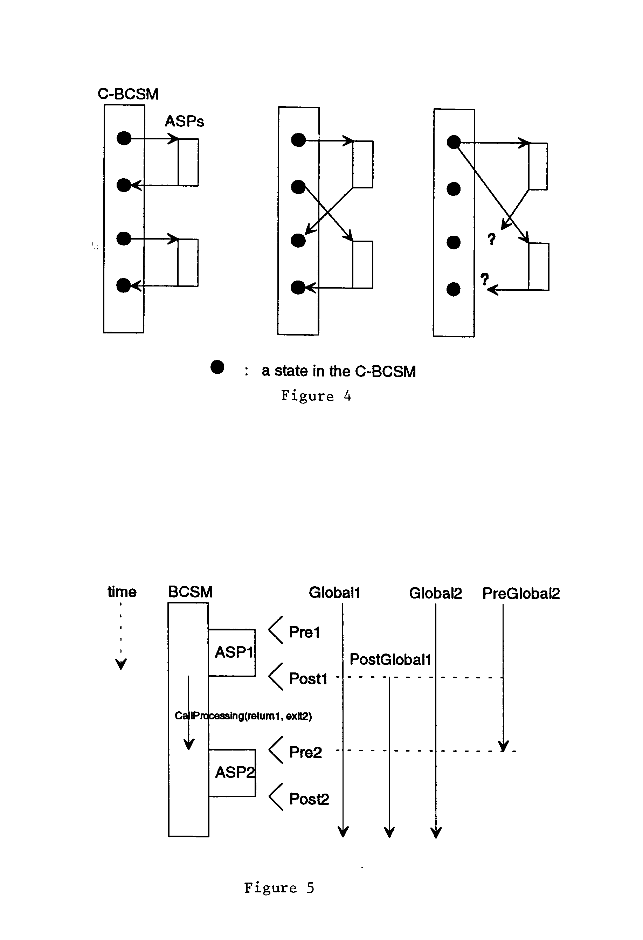

If the relation of the ASPs to the BCSM is described (this relation is described by means of the exit and return in the ASP specifications) they can be compared. For configuration 1 and 2 this is visualised by figure 4. Note that figure 4 assumes that an ASP has only one possible return. Since this is a very useful property we will decompose the ASP into ASPs that only have one return. This way ASP comparison will be more easy. If ASPs are specified such that they can be easily decomposed, then workload will be reduced.

A convention to be used for the description of postconditions states that all possible return flows are described in a conjunctive format (e.g. return= and screen(...)=true and ...) and the complete condition is the disjunction of the conjunctive parts. Usually this leaves only one interesting case per ASP and several exception cases. A conjunctive part will contain one return. The sequel will deal with the detection of interaction using only one conjunctive part of the post condition of an ASP. The global conditions (Global and PostGlobal) of the original ASP should be dissected as well, such that they correspond to the different conjunctive parts of the post condition. Hence, a step to be performed is: Dissect the ASPs in conjunctive parts. An ASP of which the post condition only consists of one conjunctive part will be called a conjunctive ASP. All conjunctive ASPs that can be dissected from an original ASP have to be compared with all conjunctive ASPs that can be dissected from the second original ASP.

### Example

An ASP will often look like this (where P and Q1, Q2, Q3 and Q4 are arbitrary conditions:
{ P}
ASP
{ (Q1 and Q2) or (Q3 and Q4)
{Global: G1 or G2

This ASP can be split into two conjunctive ASPs:
{P} ASP { (Q1 and Q2) {G1}
and
{P} ASP { (Q3 and Q4) {G2}
Note that in the specification it is not made explicit that G1 corresponds to (Q1 and Q2) and that G2 corresponds to (Q3 and Q4).

This will be used by convention.

End of example

In the following the detection for a pair of conjunctive ASPs will be considered. The questions that have to be answered for our derivation are: which cases can be distinguished and what can be concluded if such cases are identified?

When all the steps described below are performed, the conclusions per pair of conjunctive ASPs have to be gathered to draw a final conclusion. It can be expected that one interesting case exists and that the other cases are similar, or the other cases are exception cases (i.e. cases which result in clearing the call). Considering this case first will do most of the job. After dissecting the profiles of all configurations can be considered.

In the next paragraphs we will use exit1 for the exit point of ASP1, return1 for the return point of ASP1, etc... The following assumption is useful for restricting the case considerations below by removing symmetrical cases: exitl<exit2. The assumption exitl≦exit2 can always be established by swapping ASP1 and ASP2. If exit1 = exit2 then the detection process described below should be performed two times. One time assuming that ASP1 is triggered first (analoguous to exit1 <exit2) and one time assuming that ASP2 is executed first (i.e. swapping ASP1 and ASP2 and doing the same detection process as if exit1 <exit2). The conclusions are both relevant. Note that while performing the detection with the verification rules of this analogue situation the =' should be considered differently. E.g. exit1 =4, return1 =4, exit2=4 and return2 = 4 (The numbers refer to the BCSM, as depicted in figure 3). When ASP2 return then no jump is made to a new state, but processing in the same state is continued, i.e. not the entire state related processing is processed again. Hence, the case should be considered analoguous to return2>exit1. In case exit1≦returni and exit2≦return2 figure 4 depicts all possible profiles.

The exit-return comparison, under the assumption that exitl<exit2 looks like (bullet items indicate disjunct cases):
• RE1: return1≦exit2:

If ASP1 will be executed it will be completed before ASP2 can start. It seems that the only possible interaction that can occur will be a conflict in data processing. There remains, however, still one more control flow aspect related to CS-1. If ASP1 sets an EDP-R the feature (of which ASP1 is a part) will maintain an existing control relationship. I.e. all ASPs (not belonging to this feature) which would be triggered while the other feature still had a control relationship would not be executed. Besides, a further look to be able to say more about 'jump back' cases is required. Does ASP1 maintain an existing control relationship?

(EDP_Set, see the data table given above, can be used to identify this) If not then proceed, otherwise go to the case RE2. If a control relationship is maintained the case is analogue to the case where returnl>exit2. Note that when the 'control relationship' concept is removed in future capability sets, the question above no longer has to be asked.

### • REIa: (return2>exit1) or (exitl = exit2 and return2≧exit2):

At this point it is known that if ASP1 and ASP2 will be executed, then ASP1 will be executed first and no looping will occur. An interesting question is: will ASP2 be executed after the execution of ASP1 and if so are any of the global conditions (of both ASP1 and ASP2) violated? But, even if we know the answer to this question we cannot draw a conclusion about interaction occurring or not. A more concrete answer can be given, if we know whether ASP2 would have been executed if ASP1 is not executed.

Verify (V1): {Pre1} CallProcessing(exit1, exit2) { Pre2 and Verify (V2): {Post1 and PostGlobal1 and Global1 } CallProcessing(return1, exit2) {Pre2} If V2 does not hold, then ASP2 will not be executed. So if V1 does hold then ASP2 execution is expected by the user, hence, through the influence of ASP1 a conflict of control might occur. The case in which V2 holds and V1 does not hold, is similar: ASP1 influences control flow. Note that if ASP1 and ASP2 are considered as if they are not supposed to cooperate. Maybe ASP1 is supposed to activate ASP2, but this violates a basic assumption made earlier in this chapter. The case that both verification rules yield true (indicating proceed) require further study for potential conflicts in intentions. The case that both verification rules yield false provide no problems: no simultaneous ASP execution will occur, so no conflicts in data processing.

Figure 5 clarifies why this verification rule looks like above. But, notice that PreGlobal1 is not used in V2, since PreGloball is relevant only when ASP2 is executed. The same figure will be helpful (with a slight modification) to explain the verification rules.

If this verification rule holds, then ASP2 will be processed and any of the set of global conditions of ASP1 and ASP2 can be violated. Note that this is the part that can be regarded as the verification of conflicts in intentions. The conditions that have to hold between operations (ASPs) after ASP1 can be violated by ASP2. The conditions that have to hold between operations (ASPs) before ASP2 is executed can be violated by ASP1. The following rules to be verified.

Verify:
{ PreGlobal2 and Global2 and Pre1} ASP1 {PreGlobal2 and Global2 and Post1} and verify:
{ PostGlobal1 and Globall and Pre2} ASP2 (PostGlobal1 and Globall and Post2} If these rules hold, then no interaction will occur. These verification rules can also be explained when looking at figure 5.

### Example

By means of example a simple specification for Outgoing Call Screening (OCS) using a black list and Abbreviated Dialling (ABD) will be used. CPN will be used as abbreviation for called party number.

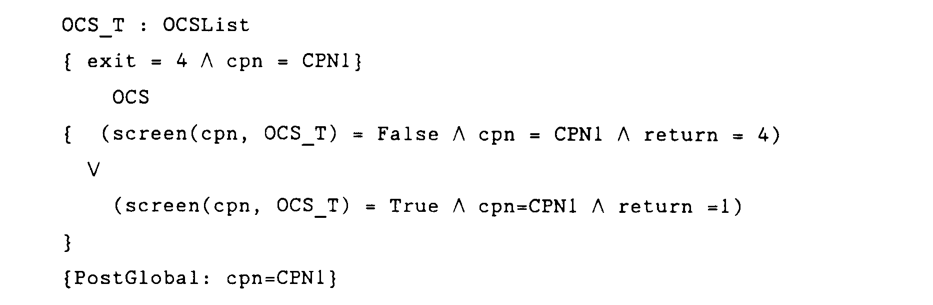

The conditions make use of the specification variable (with constant, but unknown, value) CPN1. Hence the global post condition, which has to be maintained by every other ASP states that the called party number may not be changed!

In this example the following dissected case will be used:

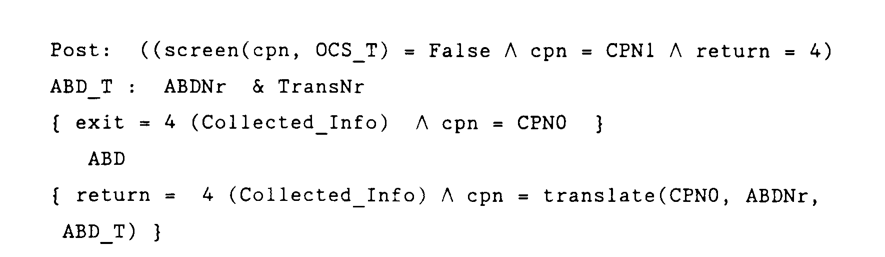

Only configuration 1 will be considered. When looking at the profile it can be concluded that for detection purposes two cases (because exit_OCS=exit_ABD) should be considered: ABD; OCS and OCS; ABD. For this example only OCS; ABD will be investigated.

The rule to be verified first is: {Post1} CallProcessing(return2,exit1) {Pre2}, which in this example looks like:

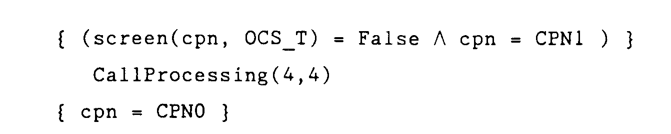

This is only true when CPN1 =CPNO, but since CPN1 and CPNO are specification variables CPN0=CPN1 will hold.

The case CPNO = CPN1 obliges us to verify the rules with the global conditions, in this case one of them ( the second ) looks like:
{ cpn = CPN1 and cpn = CPNO ABD
{ cpn = CPN1 and cpn = translate(CPNO, ABDNr, ABD_T)

Since CPNO = CPN1 and translate(CPNO,ABDNr, ABD_T) will definitely result in a value which differs from CPNO, this global condition is violated: interaction detected for this case, i.e. interaction is possible for the combination ABD and OCS. Notice that when no global condition would be used no interaction can be detected.

End of example
• RE1 b: (return2≦exit1) and (exit1 ≠exit2 or return2<exit2):

Similar to the previous case, but now ASP1 can be triggered for the second time, because ASP2 returns in the call before the detection point of ASP1. This 'looping' should be taken into account when comparing conditions.

Note that the jump back cases make no difference, because only the return point will not occur. So the only thing that has to be known deals with the justification of skipping ASP2. The same verifications have to be performed as in the case where return2>exitl, but now, since theoretically loops can occur, it has to be verified that termination is guaranteed. Another consequence of this case is that ASP2 can also be executed before the second execution of ASP1. If this can occur also the 'looping' danger becomes more opportune. Suppose that {Post2 and PostGlobal2 and Global2 and PreGlobal2} CallProcessing(return2, exit1) {Pre1} holds. Then ASP1 will be executed again. Sometimes this is desired and sometimes it is not. The following questions can be asked:
Q.1: Is replied execution of ASP1 desired? and Q.2: Is ASP1 executed after ASP2? Interaction occurs when either questions answered in the affirmative. Note that Q.2 can be formalised to: {Post2 and PostGlobal2 and Global2 and PreGlobal2} CallProcessing(return2, exit1) {Pre1}. The first question is not formalised. Formalisation is required when the answer to this question will be an integral part of the specification. E.g. a specification variable could be introduced indicating the replication is not desired.

### Example

This example considers Follow On Call (FOC) and Language Selection (LGS) in simplified form. It is assumed that an attribute "LanguageChosen" (type record language : (Dutch, English); chosen : boolean end) exists, indicating the language used for announcements in the call and indicating if the user has chosen this language.

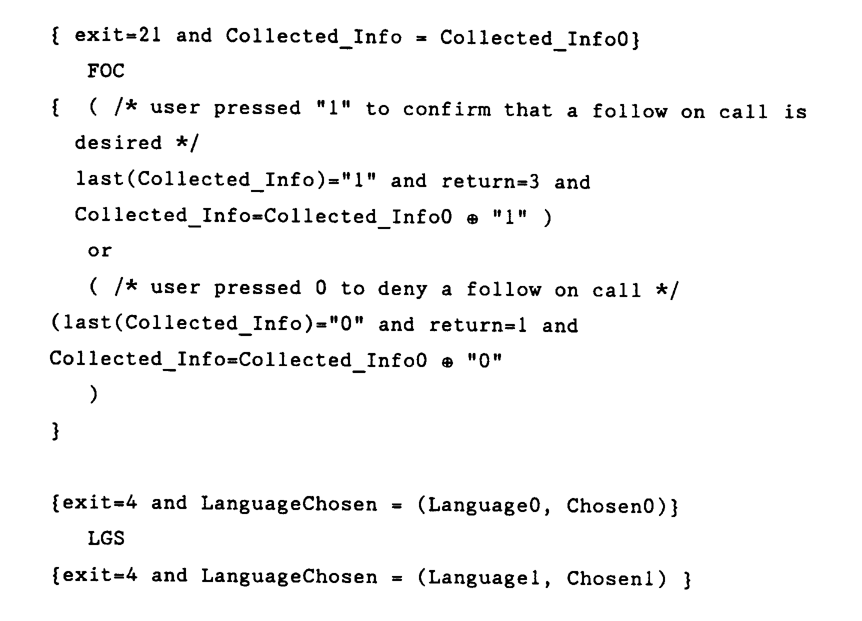

FOC has to be dissected. Note that the case in which is returned to C-BCSM state 1 a loop seems to be caused as well, but the semantics of the return is that the call is cleared. The other case will now be considered. Bear in mind that LGS is ASP1 in this example. Is replied execution of LGS desired? No. Is LGS executed after FOC?
So, does
{last(Collected _Info) = "1 " and return = 3 and
Collected_Info = Collected_Info0 ⊕ "1 "}
CallProcessing(3,4)
{LanguageChosen = (Language0, Chosen0)}
hold?

Because Language0 and Chosen0 are not relevant for call processing and for FOC, the answer to the second question is "YES". So it can be concluded that: interaction will occur due to undesired looping. End of example

### • RE2: returnl>exit2:

If ASP1 is executed, the ASP2 trigger point will be skipped. This seems like a conflict of control. If, however, the trigger condition of ASP2 would not have been true anyhow, then this can hardly be seen as undesired interference. Therefore, if the non-state related part of the pre-condition would be false independent of ASP1 execution, then no interaction can be concluded.

An interesting situation to consider occurs when ASP1 would not have been armed, but the presumed pre condition of ASP1 is satisfied at the presumed exit point of ASP1. Would ASP2 now be executed? If so, then there is a conflict of control when ASP1 is armed, but if not then there is no interaction. Note that the global conditions of ASP1 need not be taken into account since ASP1 is considered not to be executed. So verify: {Pre1} CaIIProcessing(exit1, exit2) { Pre2}. If this does not hold: 'no interaction'. If this holds: 'interaction, because of a conflict of control'.

### Example

Let's consider Origin Dependent Routing (ODR) and Time Dependent Routing (TDR). Both are considered as originating features.

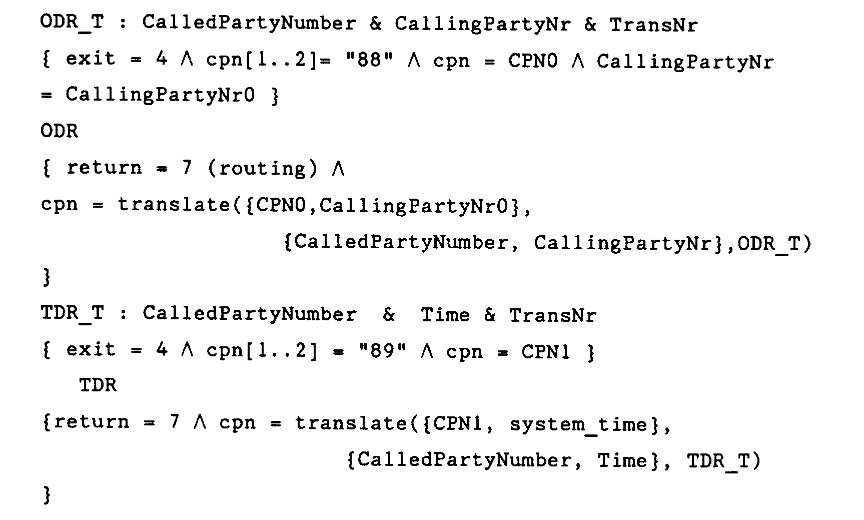

Since exit_ODR and exit_TDR are identical two cases have to considered. In this example only ODR; TDR will be considered. Because return_ODR > exit_TDR, there is a possible conflict of control and the following verification rule needs to be checked:

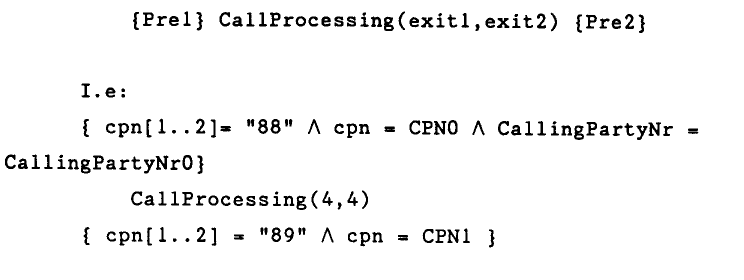

Since CallProcessing(4,4) equals doing nothing, the value of cpn[1..2] will not change, hence this rule does not hold! So, no interaction!

This example is rather illustrative for the often simple application of a complete and therefore complex method.

### End of example

In configuration 3 theoretically both ASPs can interchange parties. But to invoke this configuration it is required that a forwarding feature (FF) or a feature adding parties ( a conference feature: CF) is used. The ordering of the ASPs can then be fixed to: FE-ASP; other-ASP (or CF-ASP; other-ASP). This means that from the ASP specification must be deduced that a FF or CF is involved. For now it is decided to let the user do this job. To avoid repetition of this, a specification variable indicating this fact could be introduced. Step: Is configuration 3 possible? If so, then detection for configuration 3 should be proceeded. If not then proceed with the detection for configuration 4. Two cases can be distinguished: T-T and O-O.

T-T case: Because the ordering of the ASPs satisfying this scenario is fixed to: FF/CF-ASP ; other-ASP and because both ASPs operate on the different T-BCSMs the pre and post conditions of the ASPs are useless. The global conditions however remain interesting! These conditions may still not be violated. Hence, the following rules should be verified:
• {PostGlobal1 and Global1 and Pre2} ASP2 {PostGlobal1 and Global1 and Post2}
• {PreGlobal2 and Global2 and Pre1} ASP1 {PreGlobal2 and Global2 and Post1} When both ASPs are FF/CF-ASPs the symmetric case has to be considered as well, since two possible orderings might occur. The verification rules are precisely the same as in the branch where returnl≦exit2 and return2>exitl. So if this branch has already been investigated then this step can be skipped.

O-O case: This case can only occur when an intermediate party uses a conferencing or forwarding feature. If so then possibly an originating model is used to set-up the new call or to add a new leg. Despite the fact that Q.1214 does not take forwarding and multi-party into account yet, we can still draw conclusions about this case. Since we only consider pair-wise feature comparisons, and this O-O case can only occur when at least three ASPs are involved, this case does not have to be considered. The idealisation in this case is that possible interactions will be between "normal" ASPs and forwarding (or conference) ASPs and not between "normal" ASPs, due to a (third) forwarding or conferencing ASP. This is likely to be an interesting extension of the detection method, enlarging the class of interaction cases considered by the detection method.

In configuration 4, since the call instances are independent, no conflict of control will be possible. Data however, can be influenced such that one ASP will behave differently or will not be executed at all. So condition comparisons will do the work for this configuration. At this point it is only identified that two possible ASP orderings should be considered: ASP1; ASP2 and ASP2; ASP1. Because of symmetry we only describe one case, e.g. ASP1; ASP2. Again, only global conditions should be verified (under the assumption that the relevant global conditions of the ASP concerned hold).

Verify:
• {PostGlobal1 and Global1 and Pre2} ASP2 {PostGlobal1 and Global1 and Post2}
• {PreGlobal2 and Global2 and Pre1} ASP1 {PreGlobal2 and Global2 and Post1}

And the symmetric cases should be verified as well. Also in this case reuse should be made of previous conclusion on identical verification cases, if any.

### Example

The best examples of the configuration 4 case occur when activation procedures are considered. In this example Call Waiting (CW_A) activation and Call Forwarding on Busy activation (CFB_A) will be considered as a solution to a detected interaction case. The configuration 4 verification rules will be used to show that no interaction occurs in the activation procedures. But we start with the simplified specification of the CW_N and CFB_F (F for forward the call) core ASPs (i.e. the core ASP of a feature). CW_N is used to notify a terminating party of an incoming call attempt. CW_G (G for get_call) should be invoked to actually connect to the party waiting. We assume that the trigger criterium for CW_G is "R^{*}43". For this example we assume that all incoming calls are first placed in a queue and after that they will be processed. A variable that indicates the number of calls in a queue is considered to be an attribute.

An important part of specifying the ASP CW_N is expressing the intention of the notifying audible signal (CWSound).

It seems likely that the user who hears the notification expects that he/she will be connected to a waiting party after pressing "R^{*}43". This intention can be expressed in terms of Collectedlnfo and NrOfWaitingCallsInQueue. If this condition can not be maintained, then the user might be confused after pressing "R^{*}43". The fact that R^{*}43 is pressed after CW_N execution can be expressed by 'subtracting' all collected info string that were already input before CW_N execution. This is merely a formality and will hardly influence the detection process in this example.

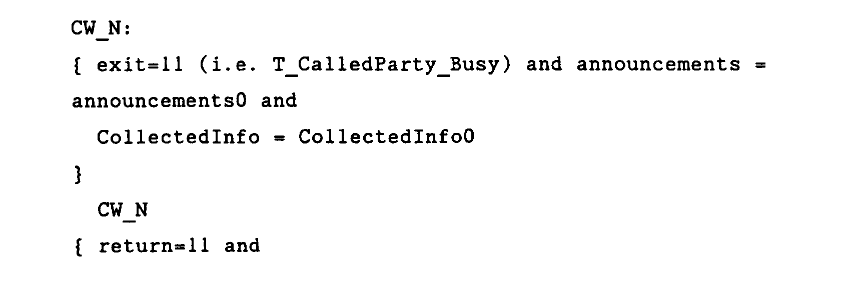

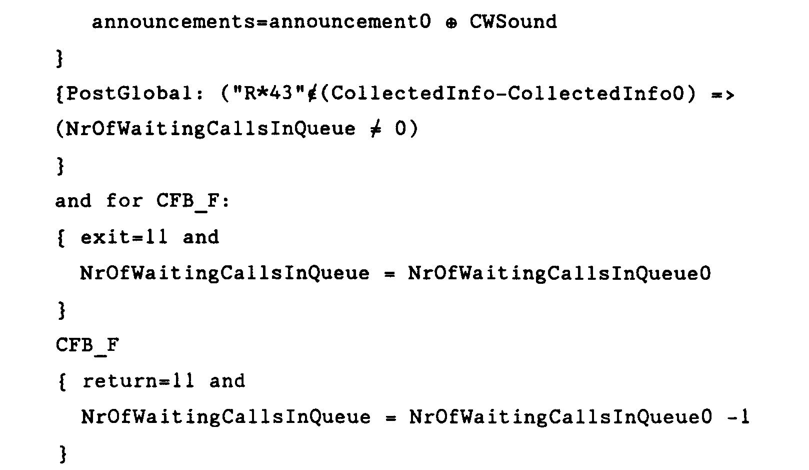

In this specification we do not specify the rerouting or forwarding of the caller attempting to reach the busy party for two reasons. In the first place because this is of no interest to the example and in the second place because this cannot be done with the current description of the CS-1 call model. But we do specify the fact that the call is not placed in the queue of waiting calls.

In this example we will consider configuration 1 and within this configuration the case that CW; CFB occurs.

Clearly: return_CW≦exit_CFB and return_CFB should be considered larger than exit CW (since the same state is considered). We have to verify:

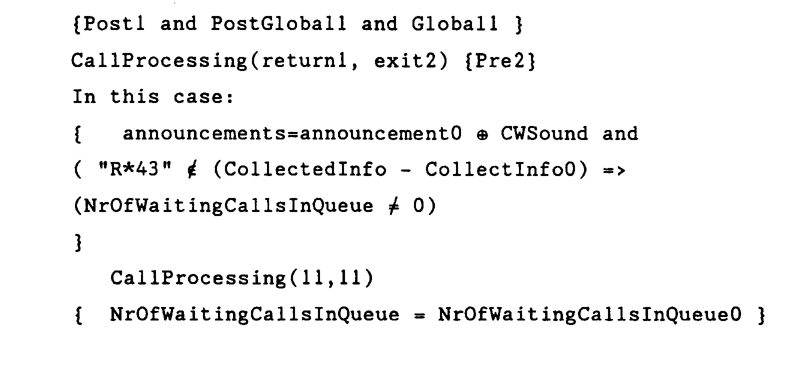

Since this verification yields true (the post condition is not related in any way to the precondition), the following rule has to be verified as well:

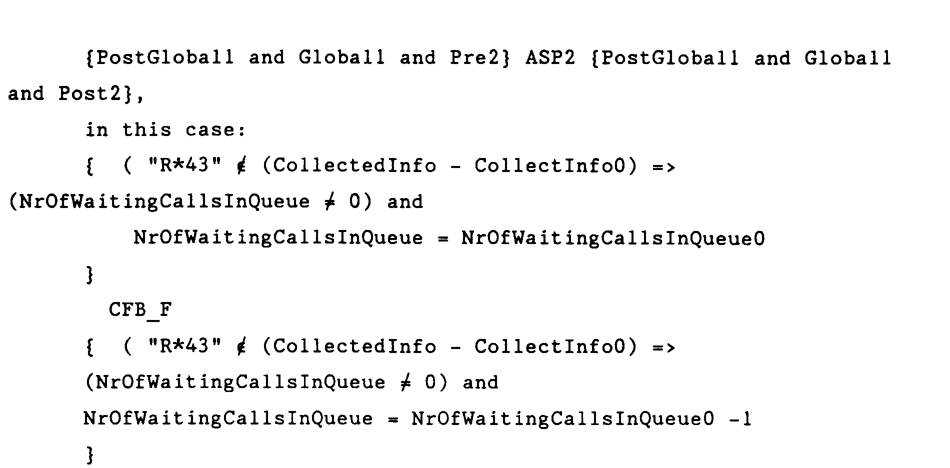

Since CFB_F and CW_N do not change Collectedlnfo we know that "R*43" ∉ (Collectedlnfo - Collectlnfo0) holds for the case that CW_N and CFB_F are executed. This yields that NrOfWaitingCallslnQueue#0 holds as a precondition. But this also yields that NrOfWaitingCallsInQueue≠0 holds as a post condition. Let's rephrase the rule to be verified:

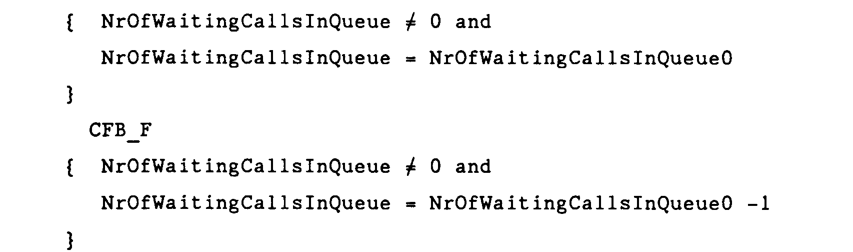

Apparently CFB_F reduces the number of waiting calls in the queue (busy buffer). Since NrOfWaitingCallsInQueue0 is a specification variable that may take any value, it can also take value 1. But then the post condition should yield (since 1-1 = 0):
{ NrOfWaitingCallsInQueue ≠0 and NrOfWaitingCallslnQueue = 0 } Clearly, this can never be achieved. So we must conclude FALSE for this verification, i.e. interaction is detected.

Until now, the example was not directly related with configuration 4. But when we look at a possible solution for this interaction configuration 4 will come into the picture. As a solution we introduce columns in the tables for both ASPs that indicate whether CW_N and whether CFB are activated. If we constraint the values of these table, such that at most one of CW and CFB_F is activated then the interaction mentioned above can not occur when CW_N and CFB_F obey this constraint. Note that obeying this constraint will have impact on the specification of CW_N and CFB_F. This constraint we mean is described as the global condition of CW A. In the detection process the following happens:

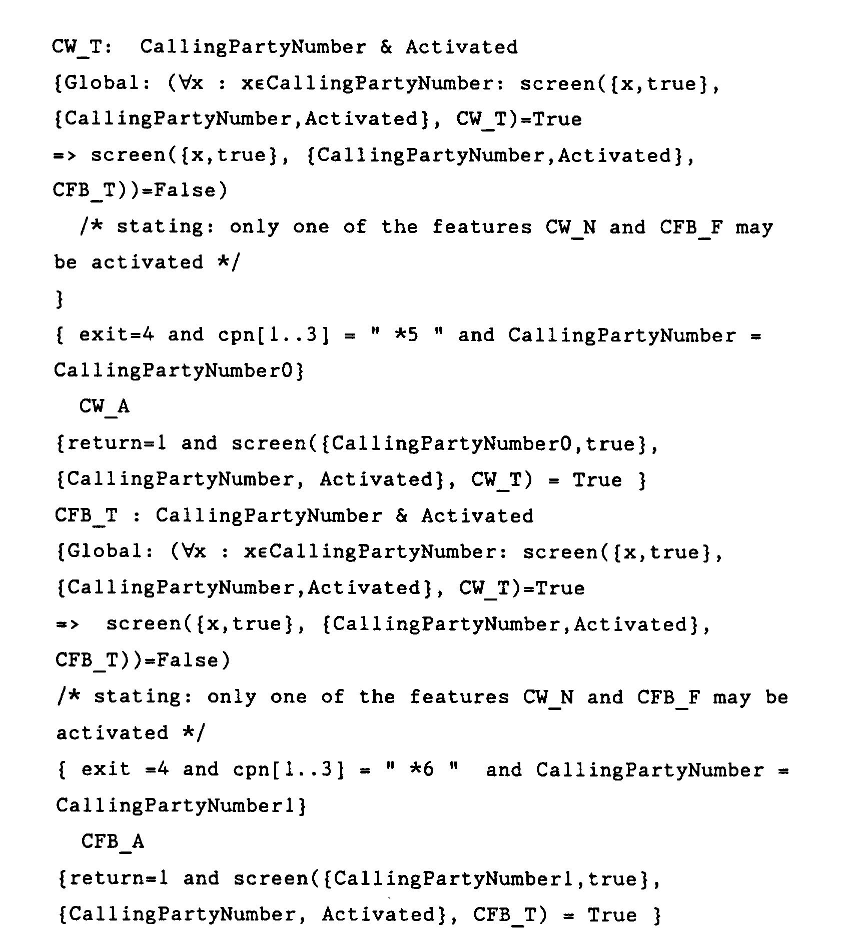

One of the rules to be verified is:
{PostGlobal 1 and Global 1 and Pre2} ASP2 {PostGlobal1 and Global 1 and Post2} In this example this looks like:

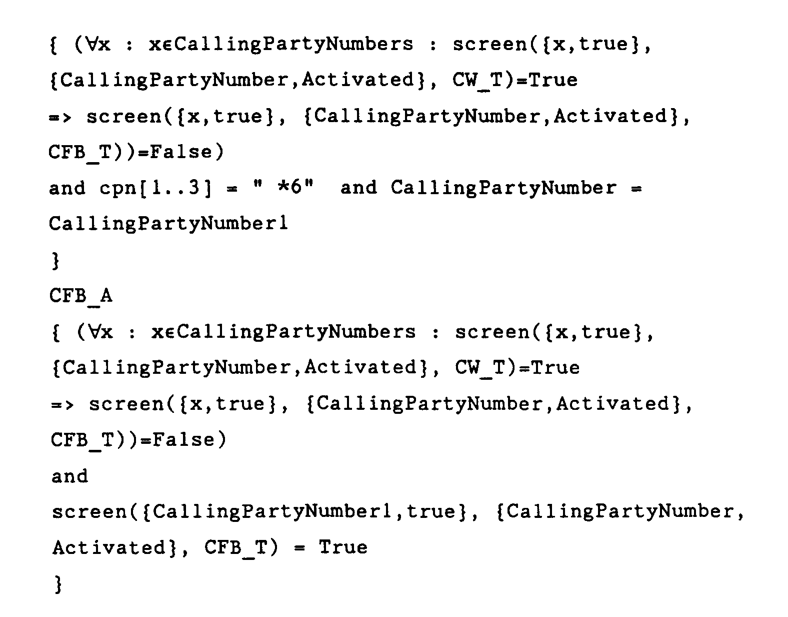

Since CallingPartyNumber1∈CallingPartyNumbers the last condition yields the following:

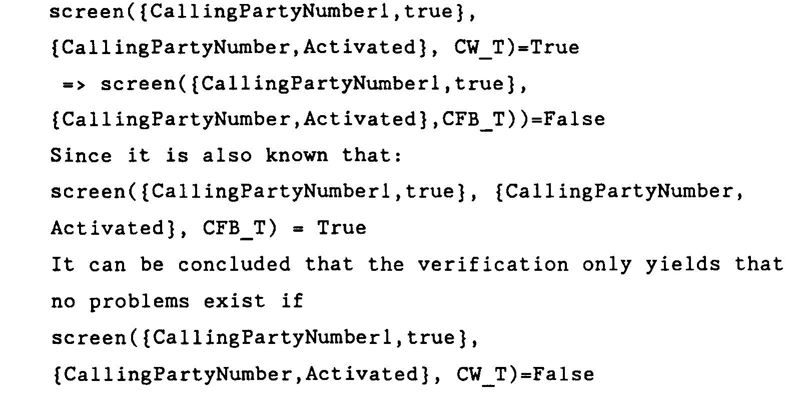

But this cannot be known beforehand! But since for CFB_A the same global condition is chosen as for CW_A, which has to be maintained by the CFB A service logic, the condition mentioned above ( CW N not activated) will hold and no interaction will occur.

Note that the global condition of CW_T depends on CFB T.

In principle this should be avoided. If this cannot be avoided then features should actually be grouped in a 'feature specification group' and finally (possibly) in one software component. End of example

The examples show that specifications clearly have aspects that are hard to describe when a pure constructive way of specifying is used. Especially these additional aspects should be considered very well when specifying services. Data, relations between this data and maintenance of these (invariant) relations play a pivotal role in the detection method.

A formal process for detection of interaction is described below. As input ASPs are assumed that have exit and return information according to the C-BCSM.
1. The detection should be performed on a pair of ASPs from different features and on identical ASPs. (Result = " ")
2. Dissect the ASPs in conjunctive parts and for all component combinations do step 3 until step 6. (Result : = Result+"Conclusions for (ASP1) vs. (ASP2)" ) (Also: take care of distinct specification variables used in the specification of the ASPs.)
3. For configuration 1 or 2, do the following:
   Compare exit and return information. Consider the ASP with the smallest exit state as ASP1 and the other as ASP2. If both exit states are equal then perform this step twice: such that each ASP is considered both as ASP1 and as ASP2. This way the ordering of triggers within the detection point is emulated. The conclusions are both relevant.
3.1 if returnl≦exit2 then:
3.1.1 If ASP1 maintains an existing control relationship (EDP_Set can be used to identify this) then : go to step 3.2.
3.1.2 If ASP1 does not maintain an existing control relationship:
3.1.2.1 If (return2>exitl) or (exit1 =exit2 and return2≧exit2) : Verify {Prel} CallProcessing(exit1, exit2) {Pre2} and verify: {Post1 and PostGlobal1 and Global1 CallProcessing(return2, exit1) {Pre2}
3.1.2.1. If one is true and one is false then Result: = Result + "Interaction because of a conflict of control (ASP1 influences control of ASP2)" Proceed with step 4
3.1.2.1.2 If both are true then :
   Verify:
   {PreGlobal2 and Global2 and Pre1 }ASP1{PreGlobal2 and Global2 and Post1}
   and verify:
   {PostGlobal1 and Globall and Pre2}ASP2{PostGlobal1 and Globall and Post2}
   3.1.2.1.2.1 If true then proceed with step 4
   3.1.2.1.2.2 If false then: Result: = Result + "Interaction" and proceed with step 4
   3.1.2.1.3 If both are false then proceed with step 4
   3.1.2.2 If (return2≦exit1) and (exit1 ≠exit2 or return2<exit2)
   Verify: {Post2 and Global2 and PostGlobal2 and PreGlobal2}
   CallProcessing(return2, exit1) {Pre1}
   (l.e. can ASP1 be executed after ASP2?)
   3.1.2.2.1 If true and replied execution of ASP1 is desired then: Proceed with step 4.
   3.1.2.2.2 If false and replied execution of ASP1 is desired then: Result: = Result + "Interaction, ASP1 should be re-executed, but will not" and proceed with step 4
   3.1.2.2.3 If true and replied execution of ASP1 is not desired then: Result: = Result + "Interaction because of undesired re-execution". Proceed with step 4
   3.1.2.2.4 If false and replied execution of ASP1 is not desired then: Proceed with step 4.
3.2 return1>exit2:
   Verify: {Pre1} CallProcessing(exit1, exit2) { Pre2}
   3.2.1 If false: proceed with step 4.
   3.2.2 If true: Result: = Result + "Interaction because of conflict of control" and proceed with step 4.
4. For this step two cases can be distinguished:
   4.1 If configuration 3 is not possible then proceed with step 5
   4.2 If configuration 3 is possible then:
   4.2.1 If it is the O-O case then proceed with step 5
   4.2.2 If it is the T-T case then:
   Verify:
   {PostGlobal1 and Globall and Pre2} ASP2 {PostGlobal1 and Globall and Post2}
   and
   {PreGlobal2 and Global2 and Pre1} ASP1 {PreGlobal2 and Global2 and Post1}
   4.2.2.1 If true then proceed with step 5
   4.2.2.2 If false then Result : = Result + "Interaction, because of conflict in conditions"
5. For configuration 4 do:
   Verify:
   {PostGlobal1 and Globall and Pre2} ASP2 {PostGlobal1 and Globall and Post2}
   {PreGlobal2 and Global2 and Pre1} ASP1 {PreGlobal2 and Global2 and Post1} and
   {PostGlobal2 and Global2 and Pre1} ASP1 {PostGlobal2 and Global2 and Post1}
   (PreGlobal1 and Globall and Pre2} ASP2 (PreGlobal1 and Globall and Post2}
   5.1 If true then proceed with step 6.
   5.2 If false then Result: = Result + "Interaction, because of conflict in conditions".
6. If other conjunctive ASP combinations have to be considered then proceed with step 3 and if a new pair of ASP combination has to be determined then proceed with step 1.
   This concludes the detection process according to the invention.

The invention provides a suitable method to specify additional service processing. This method is powerful enough to specify various services identified thus far. Furthermore, a detection method has been developed that is able to detect interactions between ASPs using the ASP specification as introduced here.

The detection method presented here is based on the use of global conditions. Global conditions enable to express properties imposed by the execution of an ASP outside the scope of the execution itself. E.g. a signal to an end-user is used to notify the end-user of something and when the signal-processing has finished the interpretation of the end-user should not be disturbed. A global condition (in this case a global post condition) can be used to express this, in a way, that enables the verification whether violation of this property by other ASPs can occur. Global conditions, however, can be formulated without being able to be maintained at all. When global conditions are formulated they should be tested not only by comparing with global conditions of other ASPs, but also with 'implementability': not everything can be accomplished by the network, although this might be desired from a user point of view.

It will be obvious to those skilled in the art that the above examples are for illustration purposes only and that various modifications and additions can be made without departing from the spirit and the scope of the present invention.

## Claims

1. Method of detecting interactions of services in networks, comprising a first stage in which specifications of services are produced and a second stage in which the specifications of the services are subjected to an interaction detection process, the interaction detection process comprising the execution of a formal set of detection rules.

2. Process of producing service specifications for use in the method of claim 1, comprising the steps of:
a. Defining a database structure for service data;
b. Defining a global condition expressed in terms of the goal of the service (within the user's viewpoint), the service data and attributes;
c. Stepping through all detections point in the Basic Call State Model (BCSM), identifing for each detection point the activities to be performed, and marking the detection points for which interruption of the BCSM is necessary: they are to be regarded as ASPs (additional service processes); and repeating for each ASP:
d. Determining a trigger condition for the ASP and writing this condition as the first part of a pre condition, and adding for every attribute not mentioned an expression to indicate the attribute has a 'don't care' value;
e. Characterising the ASP in general terms, stating what the ASP is expected to do and which cases can be recognised;
f. Stepping through all attributes and identifing whether they will be used in the ASP (as input or as output);
g. For each attribute used as input, found in the previous step, determining per case (step e) its usage in operations on the database structure found in step a;
h. Determining per case (step e) the value of each attribute, used as output, in terms of the database structure of step 1 and the operations of step g, writing those expressions in the post condition, separated by V (conjunctive parts);
i. Checking if all attributes mentioned in the pre condition occur in at least one of the cases of the post condition; if not, removing the expression concerning the attribute from the pre condition;
j. Checking if each attribute mentioned in the pre condition occurs in all cases of the post condition;
if not, adding to the case where the attribute is missing an expression (separated by A) to assign the initial value or NILL to the attribute (if an attribute should have a new value after execution of an ASP (based on the goal), but did not get one because of faults or failures, the value should be NILL);
k. Checking if there is a part of the post condition that should hold for a longer period (during several states of the BCSM), separating this part, and stating it as a global post condition; I. Repeating step k for the pre condition.

3. Method according to claim 1 or 2, in which a Basic Call State Model is used a sdepicted in figure 3.
